# EUROPEAN PATENT APPLICATION

(11) **EP 1 691 547 A1**
(43) Date of publication of application: **16.08.2006**
(21) Application number: 04801660.4
(22) Date of filing: 03.12.2004
(51) Int. Cl.: H04N 5/64, G02B 27/02

(54) **INFORMATION DISPLAY DEVICE AND WIRELESS REMOTE CONTROLLER**

(30) Priority: 03.12.2003 JP 2003404054; 16.12.2003 JP 2003417831; 19.12.2003 JP 2003422051; 26.12.2003 JP 2003432124
(71) Applicant: NIKON CORPORATION, Tokyo 100-8831 (JP)
(72) Inventor: KATO, Shigeru, c/o NIKON CORPORATION, Tokyo 1008331 (JP); MIYAKE, Nobuyuki, c/o NIKON CORPORATION, Tokyo 1008331 (JP); OOTSUKI, Masaki, c/o NIKON CORPORATION, Tokyo 1008331 (JP)
(74) Representative: HOFFMANN EITLE
(86) International application number: PCT/JP2004/018440
(87) International publication number: WO 2005/055596

(57) **Abstract**

The head-mounted display 1 has a rear arm 2, an accommodating part 3 that is attached to the rear arm 2, a display arm 4 that is held in the accommodating part 3 so that this display arm 4 can be accommodated, a display part 5 which is attached to the tip end of the display arm 4 so that this display part 5 can pivot, and headphones 6 which are disposed on both end parts of the rear arm 2, as main parts. A flat cable 12 which supplies a power source and signals to the image display device 7 is led into the accommodating part 3 via a wiring attachment part 13, and is fastened to the accommodating part 3 by the wiring attachment part 13. In the accommodating part 3, the intermediate part of the flat cable 12 is fastened by a wiring retainer 14. Then, this flat cable 12 enters the display arm 4 from the rear end part of the display arm 4, and is further conducted to the image display device 7 inside the display part 5 via a spherical-surface coupling 10. As a result, a head-mounted display can be obtained in which there is no interference with human activity by the wiring, and in which no feeling of bother is created.

## Description

### Technical Field

The present invention relates to a wearable information display device such as a head-mounted display or near-eye display which is mounted on the head and used to observe video images, especially an information display device which shows both images and the outside world to the user, and a wireless remote controller that is used in such an information display device.

### Background Art

In recent years, various video image display devices of the eyeglass type have been proposed in which video images displayed on a display device such as a liquid crystal panel (LCD) are observed as enlarged virtual images via an optical system which has an ocular lens, half-mirror, and the like. Such image display devices are called head-mounted displays.

In most cases, these video image display devices are formed as a construction which is mounted on the head in a configuration that is wrapped around the head; such devices include devices of the both-eye type in which video image display systems are formed in positions corresponding to both eyes, and devices of the single-eye type in which a video image display system is formed in a position corresponding to one eye, i.e., either the left eye or right eye. Of these two types, devices of the both-eye type are used mainly for the purpose of enjoying video images. In the case of the single-eye type, for example, use as display devices in wearable computers and the like, and use as display devices that display instructions to workers, are expected. For instance, systems of the types described in Japanese Patent Application Laid-Open No. H8-305298 and Japanese Patent Application Laid-Open No. H10-111470 are publicly known.

The present applicant filed an application disclosing a completely new head-mounted display differing from such publicly known head-mounted displays as Japanese Patent Application Laid-Open No. 2004-207847. In this invention, the main body part of the head-mounted display that is mounted on the head of the user is mounted on the rear part of the head, and this main body part is constructed with a rear arm which possesses elasticity so as to clamp the head, left and right headphones which are attached to the rear arm, and a display arm which has a display part attached to the tip end part, as the main parts.

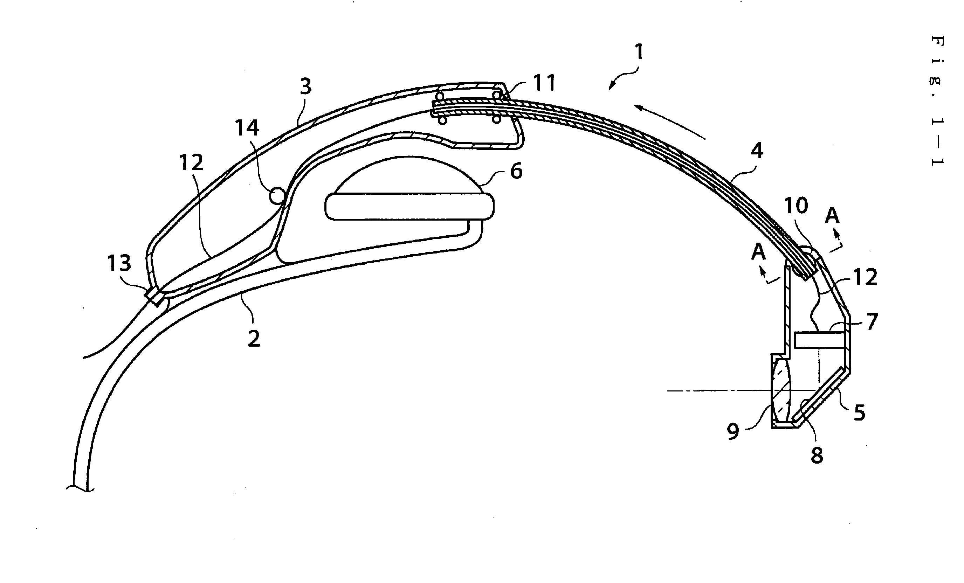

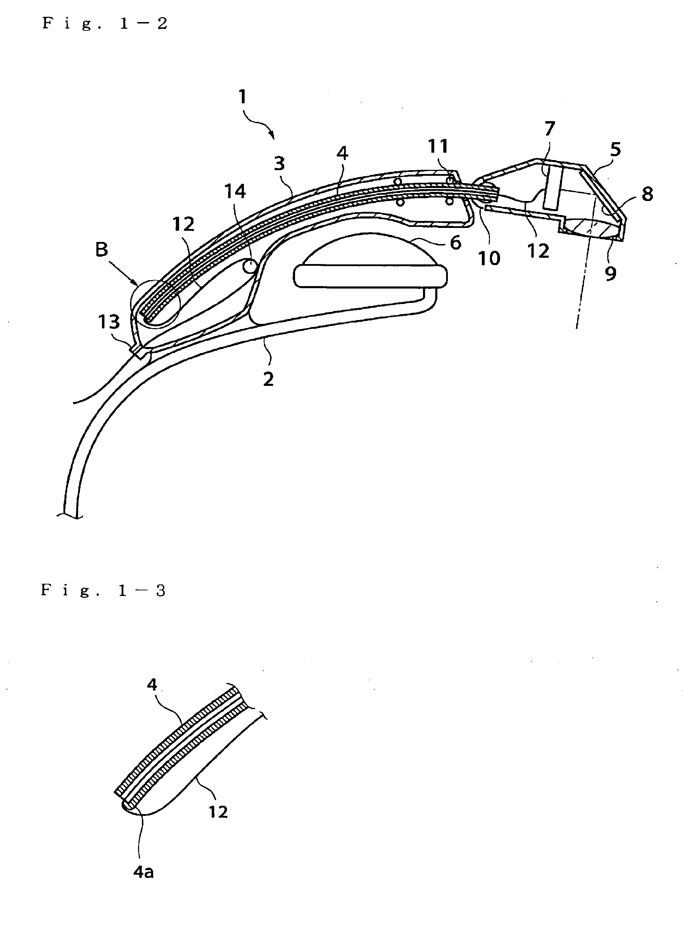

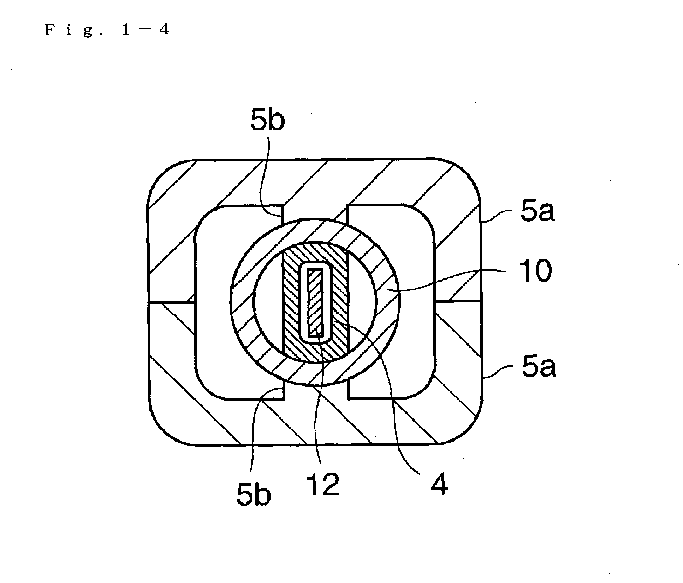

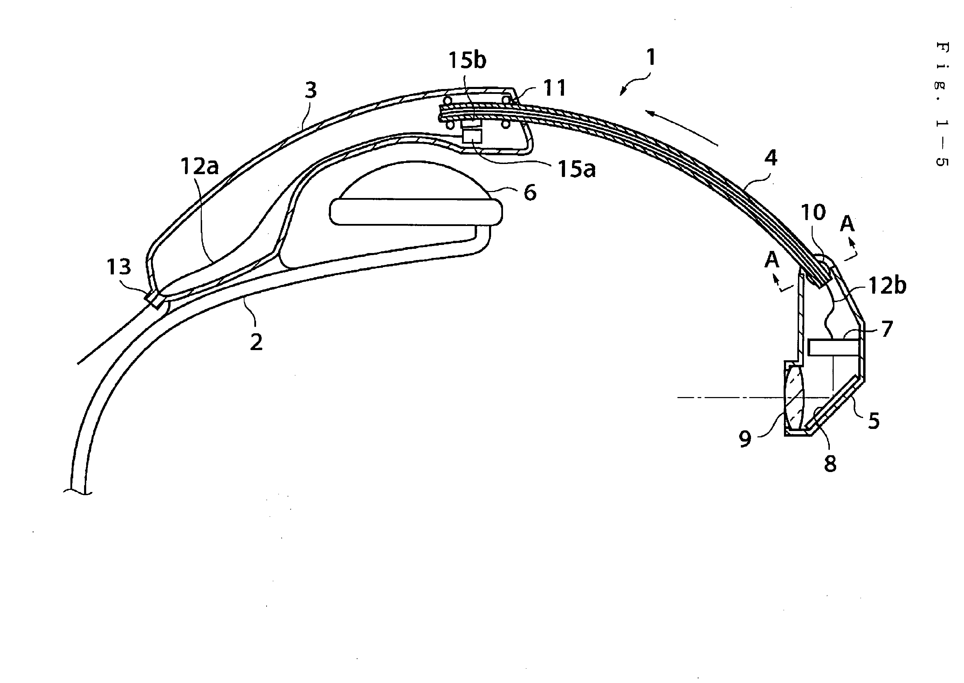

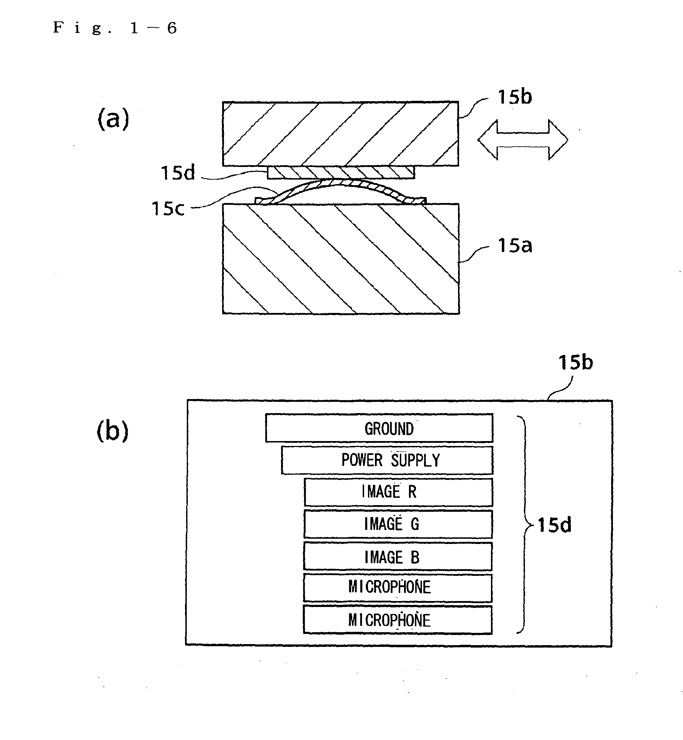

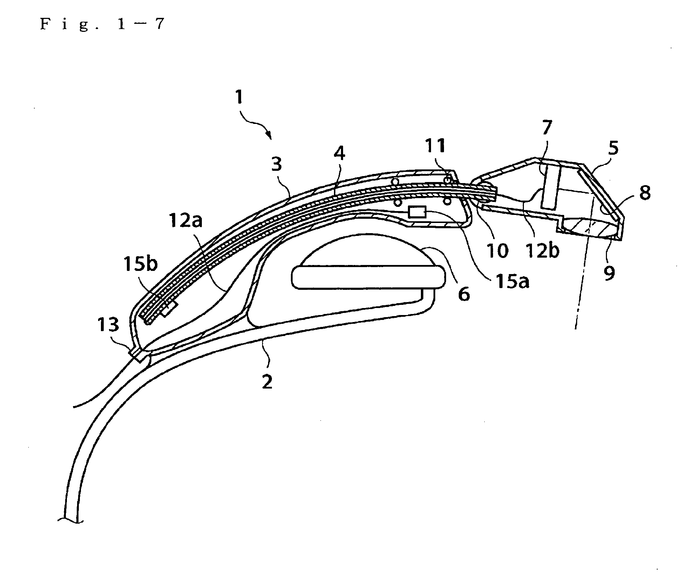

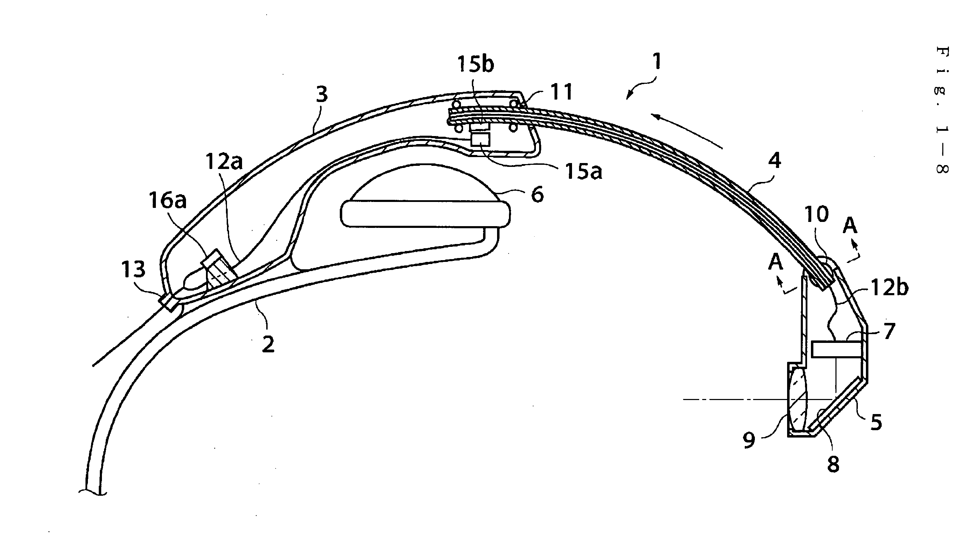

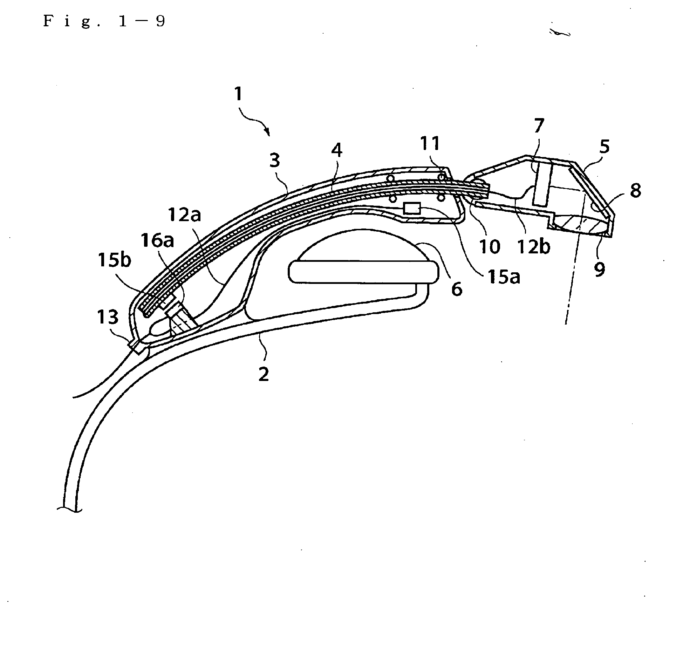

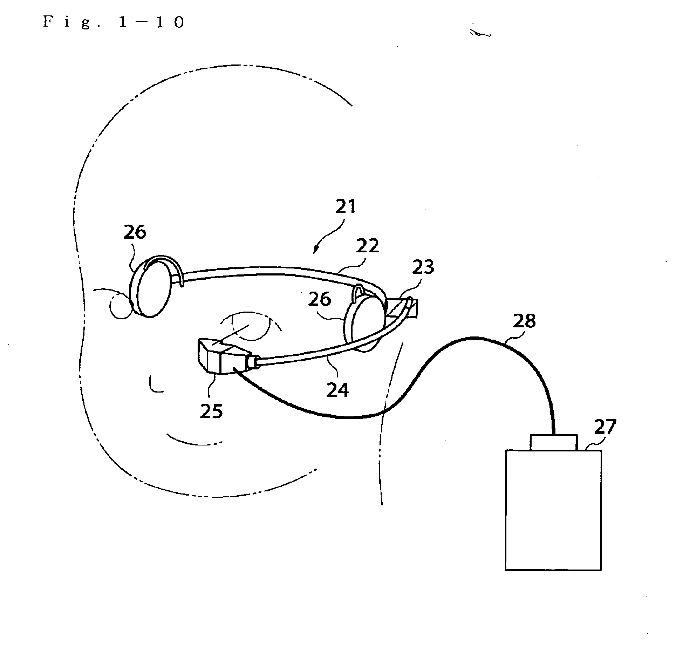

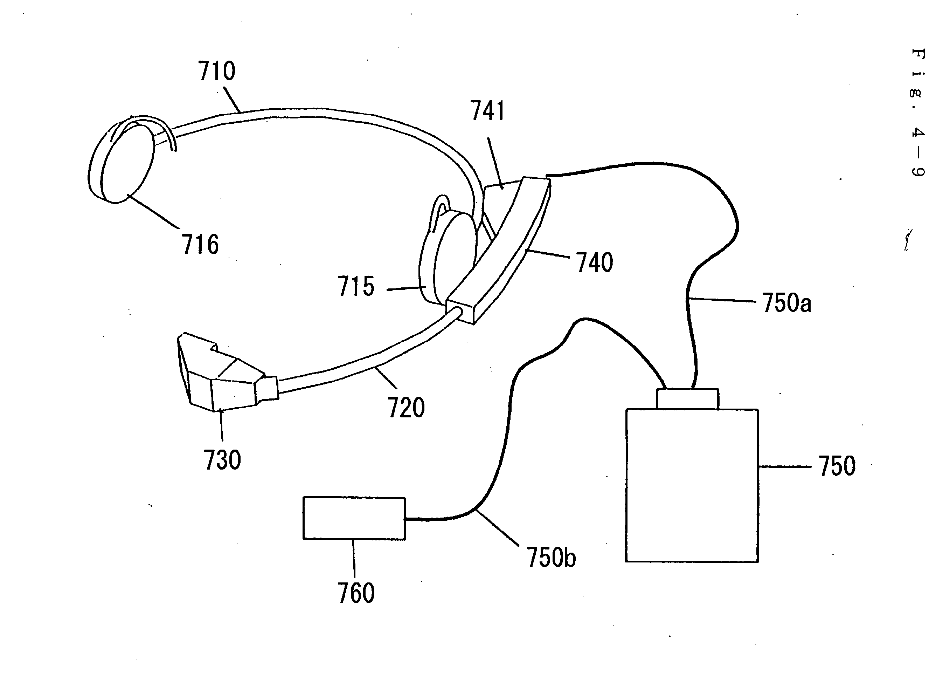

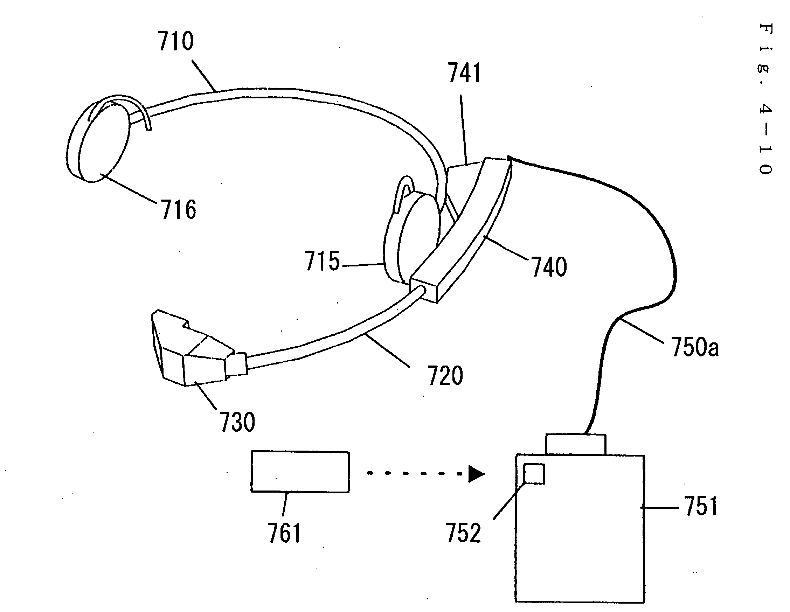

One example of such a head-mounted display is shown in Figure 1-10. Furthermore, as was described above, the display shown in Figure 1-10 is a novel system, and was not publicly known on the priority date of the present application; this display thus differs from publicly known displays such as those described in the two patent references mentioned above. Figure 1-10 shows a state in which a person is wearing the head-mounted display on the head. The rear arm 22 of the head-mounted display 21 possesses elasticity, and clamps the rear part of the person's head, so that the display itself is fastened to the person's head. A holding part 23 is attached to the rear arm 22; this holding part 23 holds a display arm 24 so that this display arm 24 is free to slide. A display part 25 is attached to the tip end of the display arm 24. Furthermore, the display arm 24 is caused to advance and retract by being caused to slide through the holding part 23, so that the display part 25 can be positioned in either a use position or a standby position. 26 indicates headphones; the head-mounted display 21 clamps the person's head from both sides via these headphones 26.

In such a head-mounted display 21, it is necessary to supply a power source and signals to an image display device disposed in the display part 25. In some cases, furthermore, the display part 25 is equipped with a microphone; in such cases, it is also necessary to supply a power source to this microphone. In a conventionally devised power supply system, as is shown in Figure 1-10, a method is used in which power supply wiring and signal wiring are run directly to the display part 25 from a control device 27 via a wiring cable 28.

However, in cases where wiring is thus run directly from the control device 27 to the display part 25, this wiring cable 28 may interfere with the operation of the device by the user, and create a bothersome feeling. The present invention was devised in the light of such circumstances; it is an object of the present invention to provide an information display device such as a head-mounted display in which the wiring to the display part of this information display device is run via a part that is fastened to the head, so that there is little interference with the operation of the device by the user, or creation of a bothersome feeling.

Furthermore, users wearing a single-eye type near-eye display can view the outside world with one eye, and can view the display screen of the near-eye display with the other eye. For example, such a user may view movies by connecting this near-eye display to a device such as a DVD player. In most cases, the attention of the user is concentrated more on the movie than on the outside world.

However, in cases where a person suddenly crosses in front of the user, or an object in front of the user suddenly approaches, or in cases where a change occurs such as the sudden lighting of extinguished illumination in the area surrounding the user or the flashing of an emergency lamp in the area surrounding the user, the object on which the attention of the user is concentrated immediately switches from the movie to the outside world. Such switching inside the brain is useful for immediate recognition of danger in the outside world.

However, under relatively safe use conditions such as indoor use, this switching inside the brain merely disturbs the feeling of immersion in the movie, and is therefore felt as bothersome.

Accordingly, it is an object of the present invention to provide an information display device that makes it possible to maintain the feeling of immersion in images experienced by the user.

Furthermore, in a near-eye display of the single-eye type, since the presentation distance of the image (distance to the apparent position of the image) is set as a sufficiently long distance, the user can view the outside world or view the image without excessively straining the eyes.

However, the distances of objects (distances to objects) that are present in the outside world are various, and there may be cases in which such distances are short, e.g., 60 cm. In such cases, the eye that views the outside world may be strained, so that a difficult adjustment that relaxes the eye viewing the images becomes necessary, and the eyes of the user are fatigued.

Therefore, it is an object of the present invention to provide an information display device which makes it possible to reduce the fatigue of the eyes of the user.

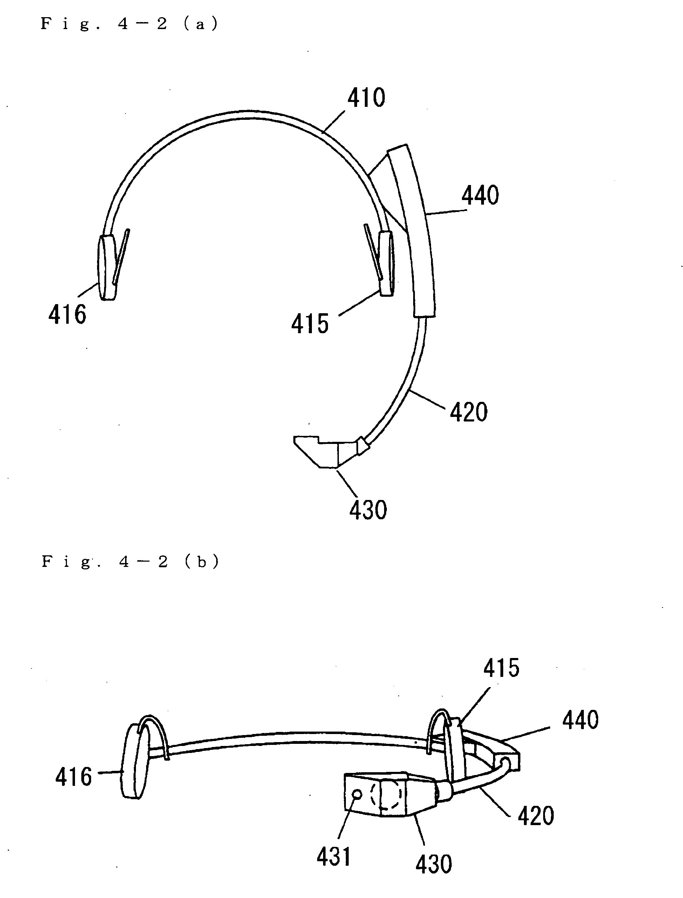

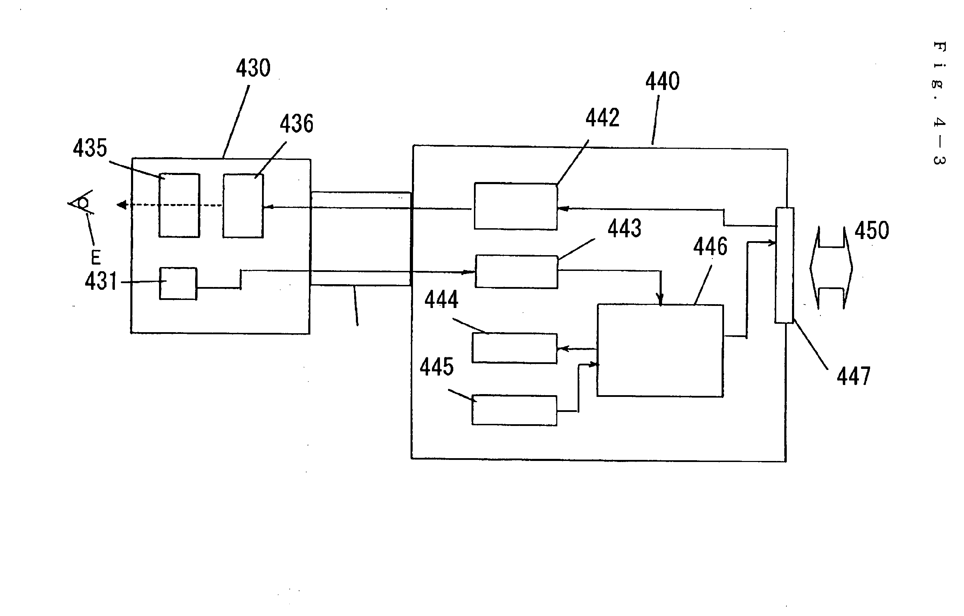

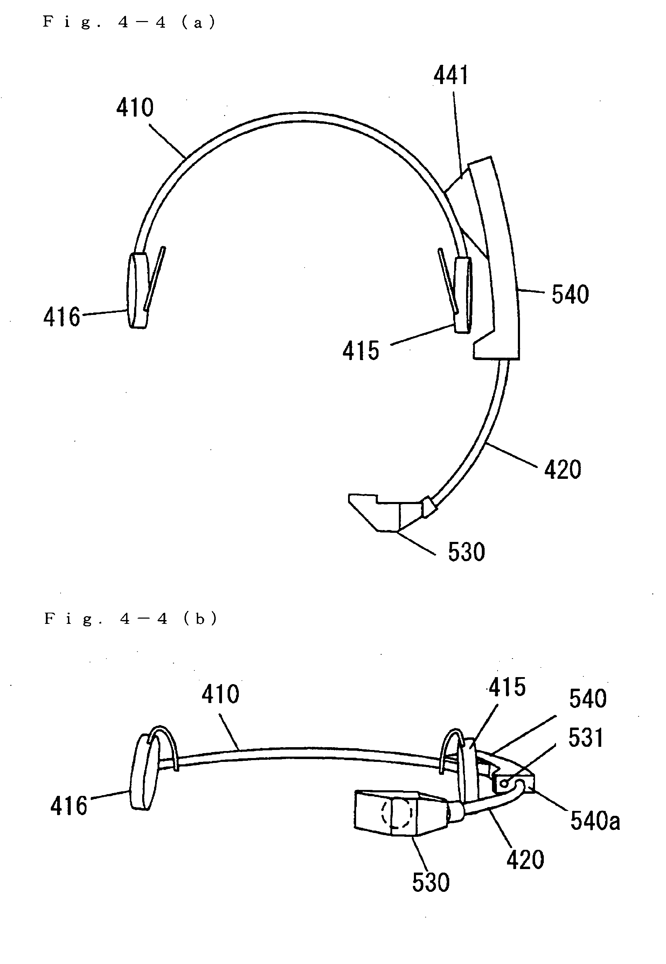

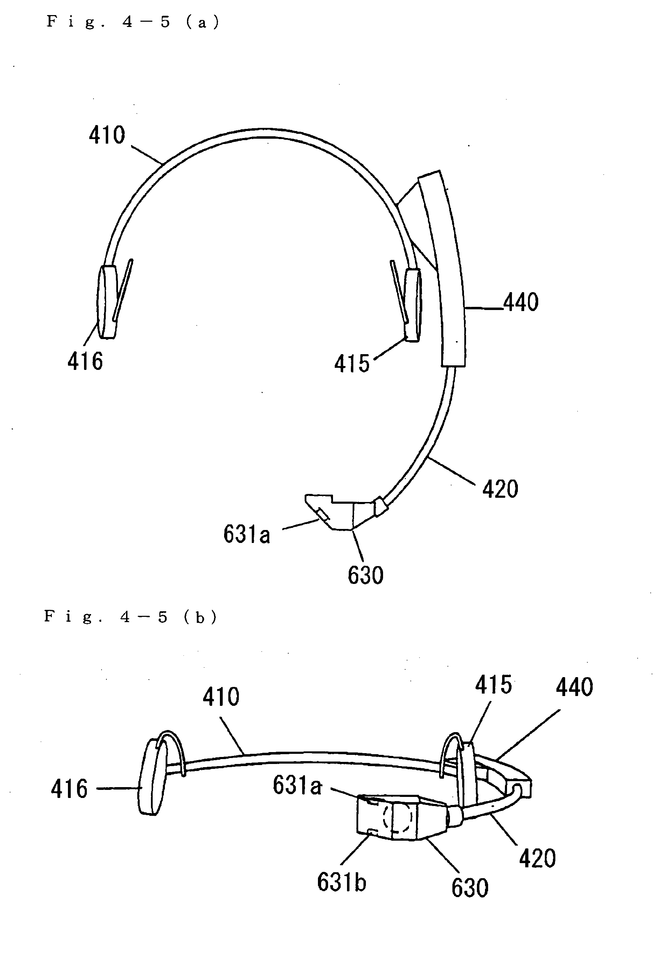

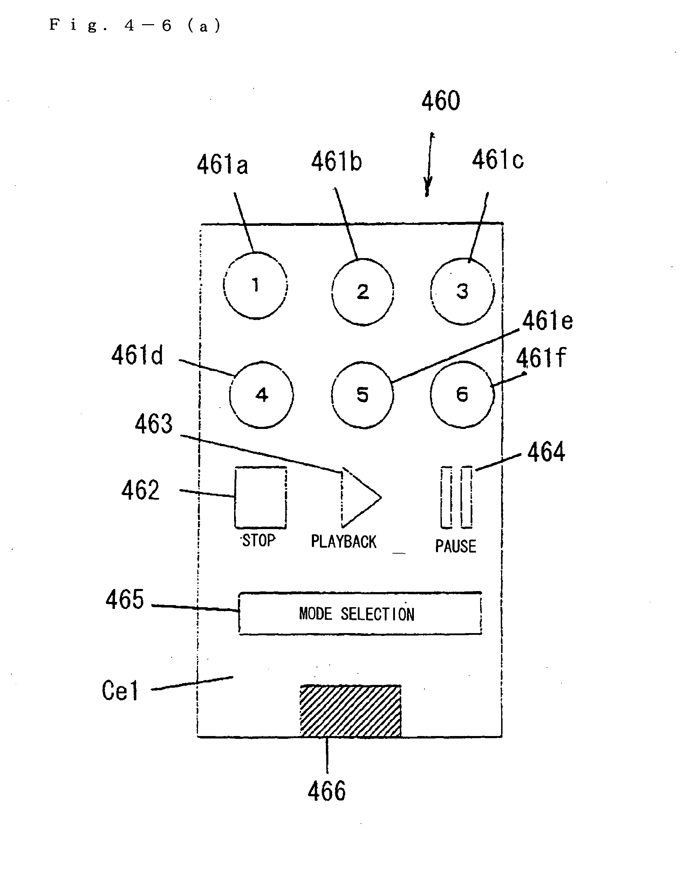

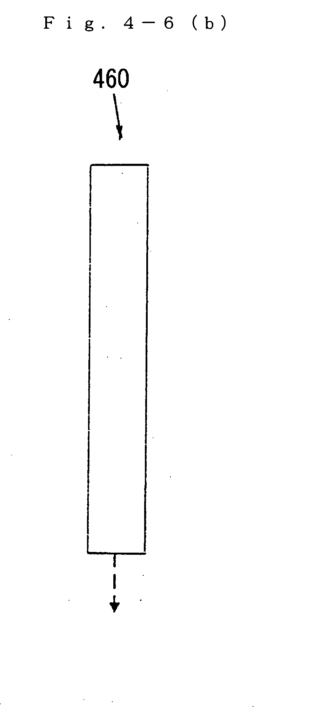

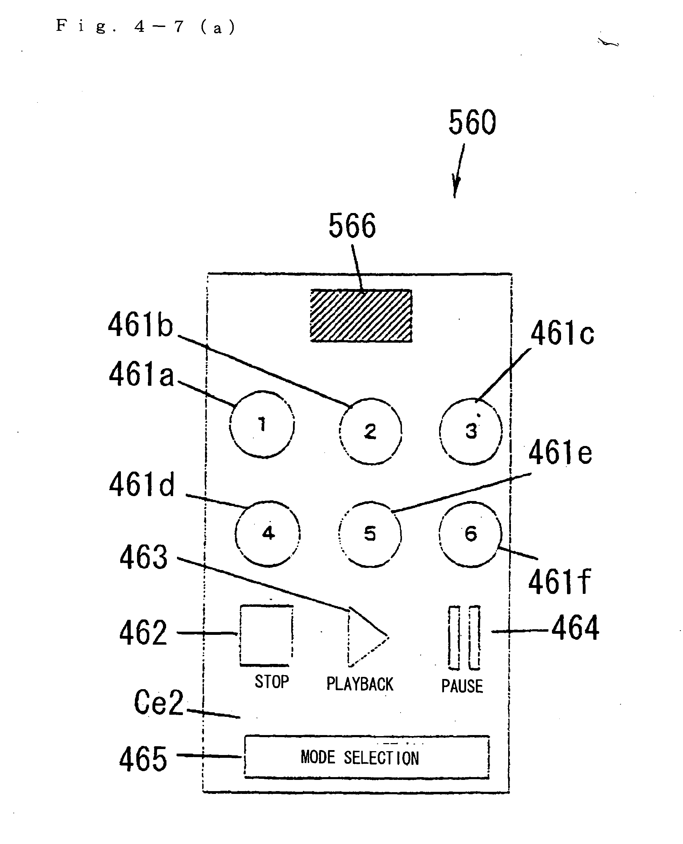

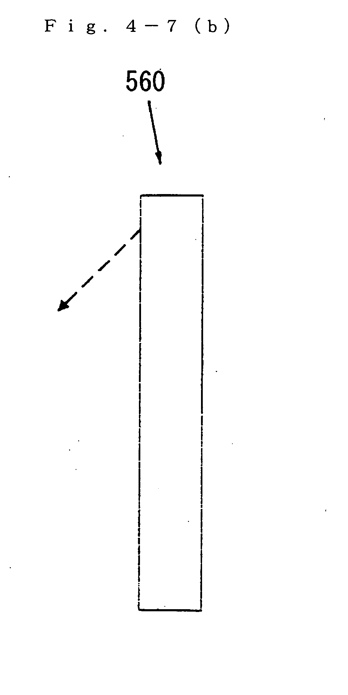

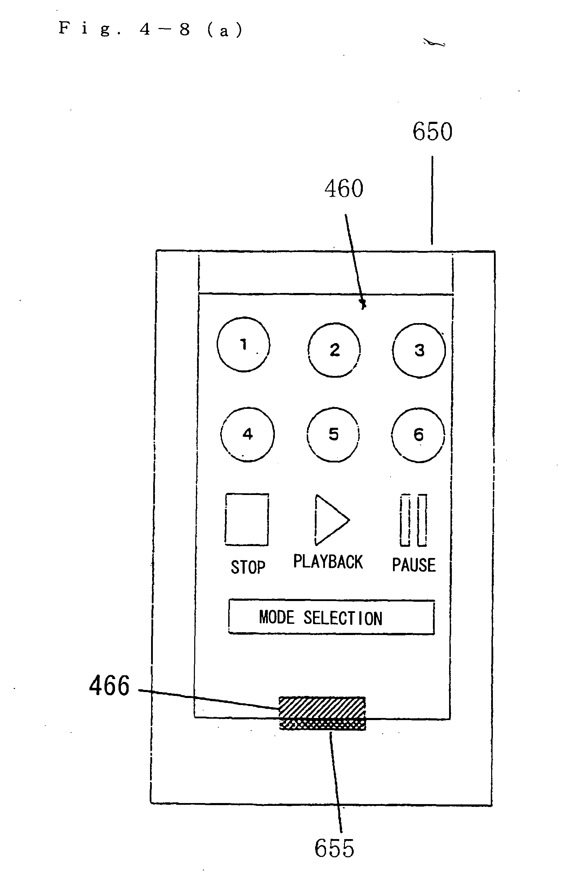

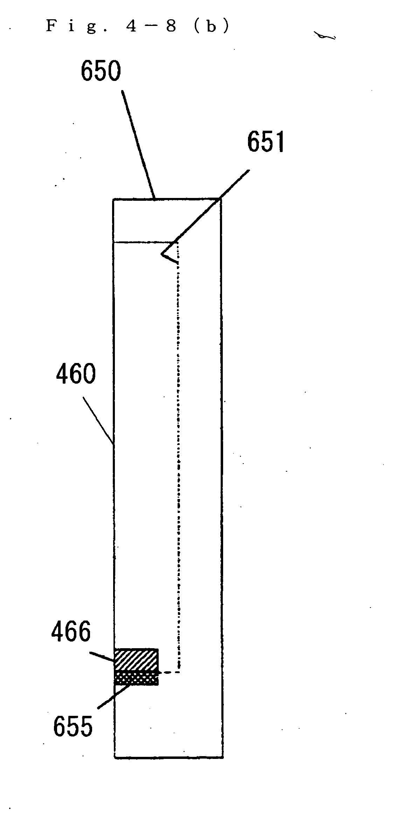

Figure 4-9 is a perspective view of a head-mounted display device.

This head-mounted display device comprises a rear arm 710, a front arm 720, a video display part 730, an accommodating part 740, a controller 750, and a remote controller 760.

The rear arm 710 has a circular arc shape, and is mounted on the rear part of the head.

Headphone parts 715 and 716 are disposed on both end parts of the rear arm 710, and are mounted on the left and right ears of the operator (not shown in the figure). Both end parts of the rear arm 710 press against the side parts of the head via the headphone parts 715 and 716.

Furthermore, the accommodating part 740 that supports an arc-form front arm 720 so that this front arm 720 is free to slide is attached to one end part of the rear arm 710 via an attachment member 741.

The video display part 730 which is disposed in front of the eye of the operator is supported on the tip end part of the front arm 720.

The controller 750 is connected to the accommodating part 740 via a cable 750a, and controls the driving of a motor (not shown in the figure) or the like that causes extension and retraction of the front arm 720 accommodated inside the accommodating part 740.

The remote controller 760 is connected to the controller 750 via a cable 750b, and sends signal data to the controller 750 via the cable 750b.

Figure 4-10 is a perspective view of another head-mounted display device. Here, parts that are in common with the head-mounted display device of Figure 4-9 are labeled with the same symbols, and a description of such parts is omitted.

This head-mounted display device differs from the head-mounted display device shown in Figure 4-9 in that the controller 751 and remote controller 761 are wireless.

The remote controller 761 has a transmission part (not shown in the figure) that emits infrared radiation.

The controller 751 has a receiving part 752 that receives the infrared radiation emitted from the remote controller 761.

In the head-mounted display device shown in Figure 4-9, since the controller 750 and remote controller 760 are connected via the cable 750b, the cable 750b must be run so that the cable does not interfere with the operation of the remote controller 760, which is a bothersome problem.

In the head-mounted display device shown in Figure 4-10, since the device is wireless, there is no bothersome problem of running the cable 750b. However, since the controller 751 is ordinarily mounted on the belt or the like of the user or accommodated in a pocket or briefcase during use, there may be cases in which it is necessary to confirm the position of the controller 751 or receiving part 752 in order to send signal data from the remote controller 761, so that there is a problem in that the device is difficult to use.

The present invention was devised in the light of such circumstances; it is an object of the present invention to improve the operating characteristics of the remote controller of an information display device such as a head-mounted display.

### Disclosure of the Invention

The first invention that is used to achieve the object is an information display device in which the virtual image of a display device is observed using an ocular optical system that is mounted on the head, wherein this device has a rear arm which is mounted on the head, and a display arm to which a display part is attached, an accommodating part that accommodates at least a portion of the display arm is disposed in the rear arm, and the wiring that runs to the display part passes through the accommodating part and the display arm from a wiring attachment part disposed in the accommodating part, and is connected to the display part.

In the present invention, wiring from the outside first reaches a wiring attachment part disposed in an accommodating part that is disposed in the rear arm (the rear arm itself may constitute the accommodating part, or the accommodating part may be attached to the rear arm). The wiring attachment part may be a part through which the wiring is simply passed and fastened in place, or may be a connecting device such as a connector).

Subsequently, the wiring passes through the accommodating part and display arm from the wiring attachment part, and is wired to the display part. Accordingly, since there is no change in the attachment position of the wiring from the outside as a result of the extension and retraction of the display arm, and since the attachment is made to the accommodating part, the attachment position is on the side surface or rear part of the head, so that an information display device can be constructed in which there is little interference with the operation of the person, and little bothersome feeling.

The second invention that is used to achieve the object is the first invention, wherein a wiring retainer which retains the wiring that extends from the rear end part of the display arm is disposed inside the accommodating part in an intermediate position between the rear end position of the display arm when the display arm is pulled out and the display part is in a use state, and the rear end position of the display arm when the display arm is accommodated in the accommodating part.

In the present invention, the wiring is fastened in place by a wiring retainer which is disposed in an intermediate position between the rear end position of the display arm when the display arm is pulled out and the display part is in a use state, and the rear end position of the display arm when the display arm is accommodated in the accommodating part. Accordingly, in these two display arm positions, the wiring from the wiring retainer to the rear end part of the display arm is folded back, so that the wiring from the wiring attachment part to the wiring retainer part can be fastened in place. Consequently, the movable part of the wiring is reduced in extent, so that trouble such as entanglement of the wiring in the accommodating part or breakage of the wiring can be reduced.

The third invention that is used to achieve the object is the first invention or second invention, wherein the bundle of the wiring is formed with a flat-plate-form flexible structure.

There may be cases in which the display arm and accommodating part for this display arm have a long flattened shape in the vertical direction when mounted on the head. Accordingly, by forming the wiring bundle with a flat-plate-form shape, it is possible to facilitate accommodation in the display arm and accommodating part; moreover, since flexible parts can be obtained by forming these parts with a flat-plate-form shape, deformation corresponding to the advancing and retracting action of the display arm is facilitated. As one example, a method is conceivable in which the wiring bundle is formed in the shape of a flat cable, or is built into a flexible board in the form of thin film wiring.

The fourth invention that is used to achieve the object is any of the first through third inventions, wherein the portion of at least the rear end part or front end part of the display arm (connecting part between the display part and this display arm) that contacts the wiring is beveled or formed with a structure that has no corners.

In cases where the wiring is led out from the rear end part of the display arm, there may be instances in which the wiring and the rear end part of the display arm contact each other, and the wiring is bent about this rear end part. In such cases, if there is a corner in the portion of the display arm that contacts the wiring, there is a danger that the wiring might be damaged by this portion. In the present invention, therefore, this portion is beveled, or is formed with a shape that has no corner, so that the possibility of such a problem occurring is reduced.

Similarly, in cases where the relative positional relationship of the display part and the display arm varies, there are instances in which the same phenomenon may occur in the front end part of the display arm. In such cases, therefore, the possibility of such a phenomenon occurring can be reduced by beveling this portion, or forming this portion with a structure that has no corner.

The fifth invention that is used to achieve the object is any of the first through fourth inventions, wherein the display part is connected to the display arm via a spherical bearing in a manner that allows pivoting, and the wiring reaches the display part by passing through the sphere of this spherical bearing.

In the information display device, it is desirable that the display part be held on the tip end of the display arm so that this display part can pivot, and that the system be devised so that the orientation of the display part can be varied between the use position and accommodated position. In such cases, if the display part is connected to the display arm by a spherical bearing so that the display part can pivot, and the wiring is conducted to the display part through the sphere of the spherical bearing, the wiring can be run from the display arm to the display part without any need for a special connector.

The sixth invention that is used to achieve the object is an information display device in which the virtual image of a display device is observed using an ocular optical system which is mounted on the head, wherein this device has a rear arm which is mounted on the head, and a display arm to which a display part is attached, an accommodating part that accommodates the display arm is disposed in the rear arm, the wiring to the display part is connected to the first part of a slide connector disposed in the accommodating part from a wiring attachment part disposed in the accommodating part, the wiring from the display part passes through the display arm, and is connected to a second part of the slide connector disposed in the display arm, and the first and second parts of the slide connector are electrically connected only when the display arm is pulled out to the use position of the display part.

In the present invention, the wiring connection between the display arm and the accommodating part of the display arm is accomplished via a slide connector. Here, this "slide connector" refers to a connector which has a first part and a second part, and in which these parts move relative to each other, so that the first part and second part are electrically connected when these parts are in a specified positional relationship, and so that the electrical connection between the first part and second part is broken when these parts are in some other positional relationship. Typically, a connector is used in which contacts contact each other in a certain position, while these contacts are separated from each other in most positions. However, a connector may also be used in which the electrical connection depends on electromagnetic induction coupling instead of mechanical contact.

In the present invention, a slide connector is used, and the system is devised so that the first and second parts of this slice connector are electrically connected only when the display arm is pulled out to the use position of the display part. Accordingly, wiring between the accommodating part and the display arm can be eliminated, so that it is possible to prevent the entanglement of wiring accompanying the movement of the display arm, and the breaking of wires due to fatigue in long-term use.

The seventh invention that is used to achieve the object is the sixth invention, wherein a portion of the wiring that runs toward the first part of the slide connector from the wiring attachment part is branched and connected to the first part of another slide connector, and the first part of the other slide connector and the second part of the slide connector disposed in the display arm are electrically connected in a state in which the display arm is accommodated in the accommodating part.

In a general information display device, it is sufficient if the device functions in the use position; accordingly, there is no need to supply a power source or signals to the display part in the accommodated position. However, information display devices include devices in which a microphone or the like is accommodated in the display part. In such cases, there may be instances in which it is desirable only for the function of this microphone or the like to be operative even in the accommodated position. The present invention is effective in such cases, and is devised so that in a state in which the display arm is accommodated in the accommodating part, the first part of a separate slide connector and the second part of the slide connector that is disposed on the display arm are electrically connected, so that the required functions can be manifested even when the display part is in the accommodated position.

The eighth invention that is used to achieve the object is the sixth invention or seventh invention, wherein the system is devised so that when the first and second parts of the slide connector are electrically connected, a ground line is first connected, a common power supply line is then connected next, and subsequently, a signal line is connected.

In the present invention, the system is devised so that the signal line is connected after first connecting the ground line and common power supply line when the first and second parts of the slide connector are electrically connected. Therefore, the danger of damage due to the excessive application of an abnormal load to the circuit during this connection can be prevented.

The ninth invention that is used to achieve the object is any of the sixth through eighth inventions, wherein the display part is connected to the display arm by a spherical bearing so that this display part can pivot, and the wiring reaches the display part by passing through the sphere of the spherical bearing.

The present invention shows the same operational effect as the fifth invention.

The tenth invention that is used to achieve the object is an information display device comprising an optical system for displaying images consisting of character information or image information, and mounting means for mounting the optical system on the user so that both the outside world and the images are presented to both eyes of this user, wherein the device further comprises detection means for detecting changes in the conditions of the outside world.

Furthermore, the term "changes in the conditions of the outside world" used here refers especially to changes having an effect on images in regions contained in the visual field of the user (within the outside world as a whole). For example, such "changes in the conditions of the outside world" include the movement of objects in the visual field in the up-down direction, left-right direction, and approaching-and-receding direction, the movement of objects into the visual field from outside the visual field, changes in the brightness of objects present in the visual field, changes in the size of objects present in the visual field, and the like.

The eleventh invention that is used to achieve the object is the tenth invention, wherein the mounting means mounts the optical system on the user so that the image is presented to only one eye of the user.

The twelfth invention that is used to achieve the object is the ninth or tenth invention, wherein the detection means detects changes in the brightness of at least a portion of the region contained in the visual field of the user within the outside world as the changes in conditions described above.

The thirteenth invention that is used to achieve the object is any of the tenth through twelfth inventions, wherein the detection means detects changes in the brightness distribution of at least a portion of the region contained in the visual field of the user within the outside world as the changes in conditions described above.

The fourteenth invention that is used to achieve the object is any of the tenth through thirteenth inventions, wherein a control part is provided which makes it possible to vary the relative degree of emphasis of the images with respect to the outside world, and this control part heightens the degree of emphasis of the images when the rate of changes in the conditions is contained in a specified range.

The fifteenth invention that is used to achieve the object is the fourteenth invention, wherein the specified range is a range that can be recognized by the brain of the user.

The sixteenth invention that is used to achieve the object is the fourteenth or fifteenth invention, wherein the control part heightens the degree of emphasis of the images by increasing the brightness of the images.

The seventeenth invention that is used to achieve the object is any of the fourteenth through sixteenth inventions, wherein the control part heightens the degree of emphasis of the images by emphasizing the contrast of the images.

The eighteenth invention that is used to achieve the object is any of the fourteenth through seventeenth inventions, wherein the control part heightens the degree of emphasis of the images by emphasizing the outlines of the images.

The nineteenth invention that is used to achieve the object is any of the fourteenth through eighteenth inventions, wherein the control part heightens the degree of emphasis of the images by weakening the intensity of light from the outside world that is incident on the eye of the user from the outside world.

The twentieth invention that is used to achieve the object is any of the fourteenth through nineteenth inventions, wherein the control part can switch between a mode in which the degree of emphasis is varied in accordance with the rate of the changes in conditions, and a mode in which the degree of emphasis is not varied regardless of the rate of the changes in conditions.

The twenty-first invention that is used to achieve the object is an information display device comprising an optical system for displaying images consisting of character information or image information, mounting means for mounting the optical system on the user so that both the outside world and the images are presented to both eyes of the user, and varying means for varying the presentation distance of the images, wherein the varying means comprises presentation distance setting means for allowing the user to set the presentation distance in an arbitrary manner.

The twenty-second invention that is used to achieve the object is the twenty-first invention, wherein the mounting means mounts the optical system on the user so that the images are presented to only one eye of the user.

The twenty-third invention that is used to achieve the object is an information display device comprising an optical system for displaying images consisting of character information or image information, mounting means for mounting the optical system on the user so that both the outside world and the images are presented to both eyes of the user, and varying means for varying the presentation distance of the images, wherein this information display device further comprises sensor means for acquiring information relating to variations in the visual distance of the eye viewing the outside world (of the two eyes of the user), and control means for driving the varying means in accordance with the output of the sensor means so that the presentation distance of the images conforms to the visual distance.

Furthermore, the "visual distance" refers to the distance from the eye to the focal position. Furthermore, "sensor for monitoring the visual distance" is included in "sensor means for acquiring information relating to variations in the visual distance."

The twenty-fourth invention that is used to achieve the object is the twenty-third invention, wherein the mounting means mounts the optical system on the user so that the images are presented to only one eye of the user.

The twenty-fifth invention that is used to achieve the object is the twenty-third or twenty-fourth invention, wherein the sensor means is a sensor that detects changes in the distance of objects present in the outside world.

The twenty-sixth invention that is used to achieve the object is the twenty-fifth invention, wherein the sensor means is a sensor that detects changes in the distance of objects that are present in the vicinity of the center of the visual field of the eye viewing the outside world.

The twenty-seventh invention that is used to achieve the object is any of the twenty-third through twenty-sixth inventions, wherein the control means corrects the amount of driving of the varying means in accordance with characteristic information relating to the user, which is acquired beforehand.

The twenty-eighth invention that is used to achieve the object is the twenty-seventh invention, wherein the characteristic information includes information relating to the positional relationship between the eye (of the two eyes of the user) viewing the images, and the optical system.

The twenty-ninth invention that is used to achieve the object is the twenty-seventh or twenty-eighth invention, wherein the characteristic information includes information relating to the refractive power of the eye (of the two eyes of the user) viewing the images.

The thirtieth invention that is used to achieve the object is any of the twenty-seventh through twenty-ninth inventions, wherein the eye viewing the outside world and the eye viewing the images are different eyes, and the characteristic information includes information relating to the difference in diopter between these two eyes.

The thirty-first invention that is used to achieve the object is any of the twenty-seventh through thirtieth inventions, wherein the device comprises acquisition means for acquiring the characteristic information from the user.

The thirty-second invention that is used to achieve the object is any of the twenty-third through thirty-first inventions, wherein the device further comprises a sensor for detecting changes in the positional relationship between the eye (of the two eyes of the user) viewing the images, and the optical system, and the control means corrects the amount of driving of the varying means in accordance with the output of this sensor.

The thirty-third invention that is used to achieve the object is any of the twenty-first through thirty-second inventions, wherein the device comprises means for displaying information relating to the presentation distance of the images.

The thirty-fourth invention that is used to achieve the object is the thirty-third invention, wherein the means is also used by the optical system.

The thirty-fifth invention that is used to achieve the object is an information display device comprising mounting means that is mounted on the head, display means for displaying images, supporting means that is supported by the mounting means and that is used to dispose the display means in front of the eyes, and an accommodating part that is disposed on the mounting means and that accommodates the supporting means, wherein the device further comprises light receiving means for receiving light as control signals incident on the display means.

The thirty-sixth invention that is used to achieve the object is the thirty-fifth invention, wherein the light receiving means is positioned on the opposite surface of the display means from the display surface.

The thirty-seventh invention that is used to achieve the object is the thirty-fifth invention, wherein the device comprises mounting means that is mounted on the head, supporting means that is supported by the mounting means and that is used to dispose the display means in front of the eyes, and an accommodating part that is disposed on the mounting means and that accommodates the supporting means, wherein the light receiving means is positioned on the display means side of the accommodating part.

The thirty-eighth invention that is used to achieve the object is the thirty-sixth or thirty-seventh invention, wherein the light receiving means faces downward at an inclination with respective to the visual axis.

The thirty-ninth invention that is used to achieve the object is the thirty-eighth invention, wherein the light receiving means is located in a position that is shifted toward the nose with respect to the visual axis.

The fortieth invention that is used to achieve the object is the thirty-sixth or thirty-seventh invention, wherein the light receiving means are located in a vertically symmetrical positions.

The forty-first invention that is used to achieve the object is a wireless remote controller having an operating button disposed on a remote controller case, and light emitting means which is disposed in the remote controller case, and which emits light as control signals to light receiving means disposed in a head-mounted display device, wherein the light emitting means is disposed so as to face the operator when the operator operates the operating button.

The forty-second invention that is used to achieve the object is the forty-first invention, wherein the light emitting means is disposed on the side surface of the remote controller case.

The forty-third invention that is used to achieve the object is the forty-first invention, wherein the light emitting means is disposed on the surface of the remote controller case on which the operating button is disposed.

The forty-fourth invention that is used to achieve the object is the forty-third invention, wherein the light from the light emitting means is emitted at an acute angle with respect to the surface on which the operating button is disposed.

### Brief Description of the Drawings

Figure 1-1 is a diagram showing an outline of a head-mounted display constituting Working Configuration 1-1 of the present invention.
Figure 1-2 is a diagram showing a state in which the display arm is accommodated in the accommodating part in Working Configuration 1-1 of the present invention.
Figure 1-3 is an enlarged view of part B in Figure 1-2.
Figure 1-4 is a sectional view along line A-A in Figure 1-1.
Figure 1-5 is a diagram showing an outline of a head-mounted display constituting Working Configuration 1-2 of the present invention.
Figure 1-6 is a diagram showing an example of the structure of the slide connector.
Figure 1-7 is a diagram showing a state in which the display arm is accommodated in the accommodating part in Working Configuration 1-2 of the present invention.
Figure 1-8 is a diagram showing an outline of a head-mounted display constituting Working Configuration 1-3 of the present invention.
Figure 1-9 is a diagram showing a state in which the display arm is accommodated in the accommodating part in Working Configuration 1-3 of the present invention.
Figure 1-10 is a diagram showing an outline of the head-mounted display.
Figure 2-1 is an overview of a near-eye display constituting Working Configuration 2-1 of the present invention.
Figure 2-2 is a block diagram of the display part 116 and controller 114 of Working Configuration 2-1.

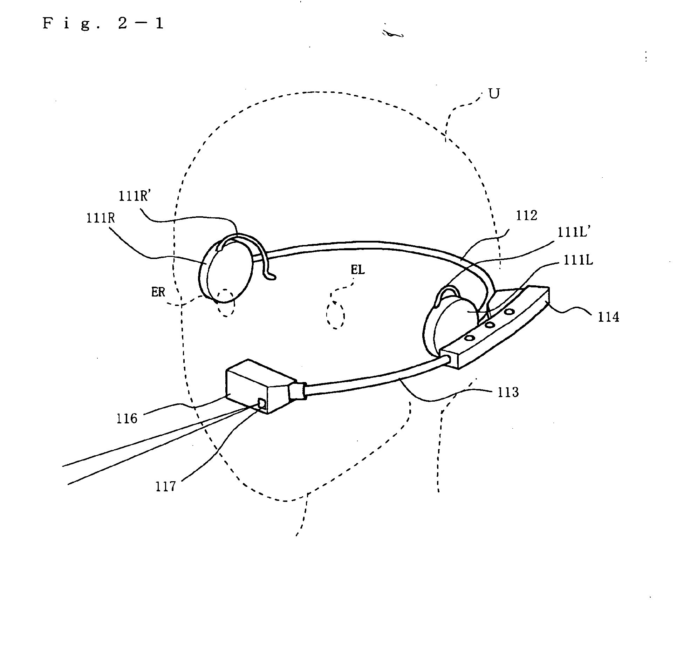

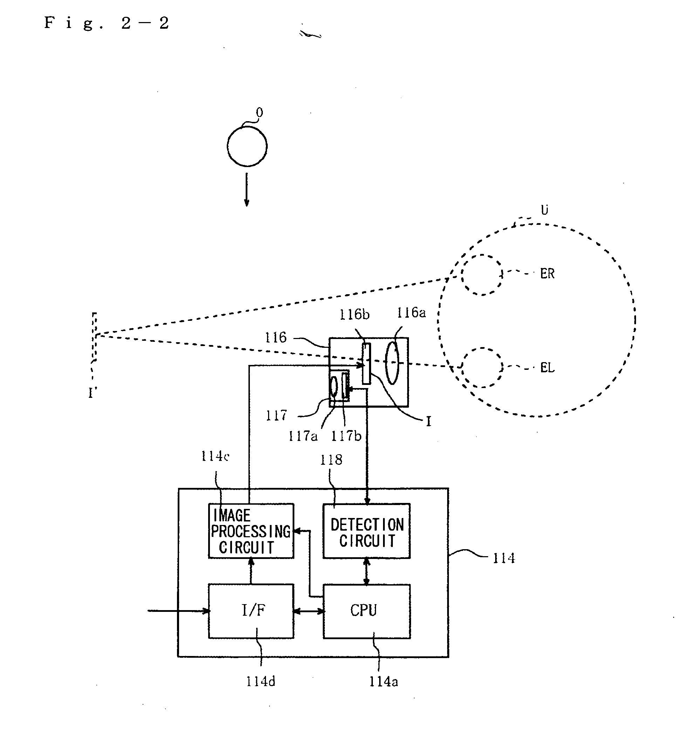

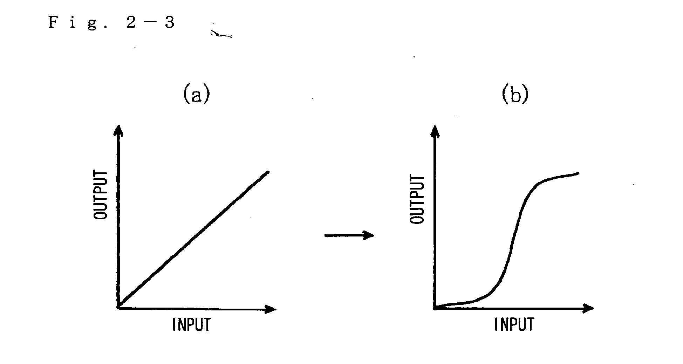

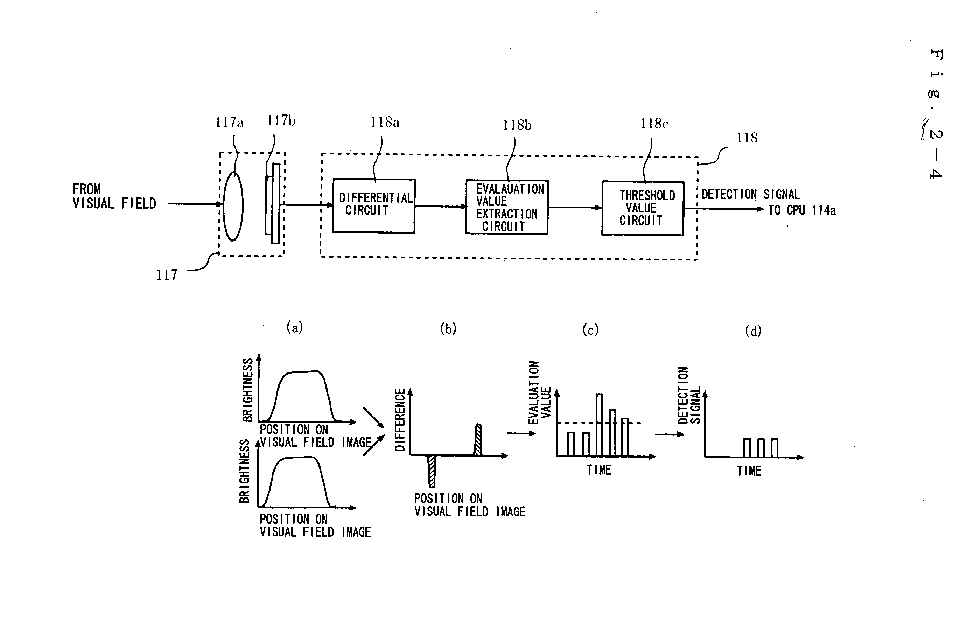

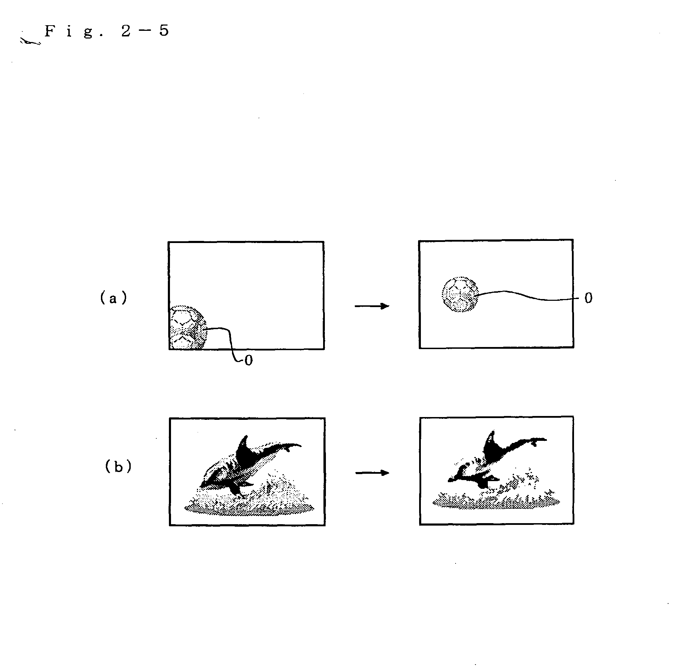

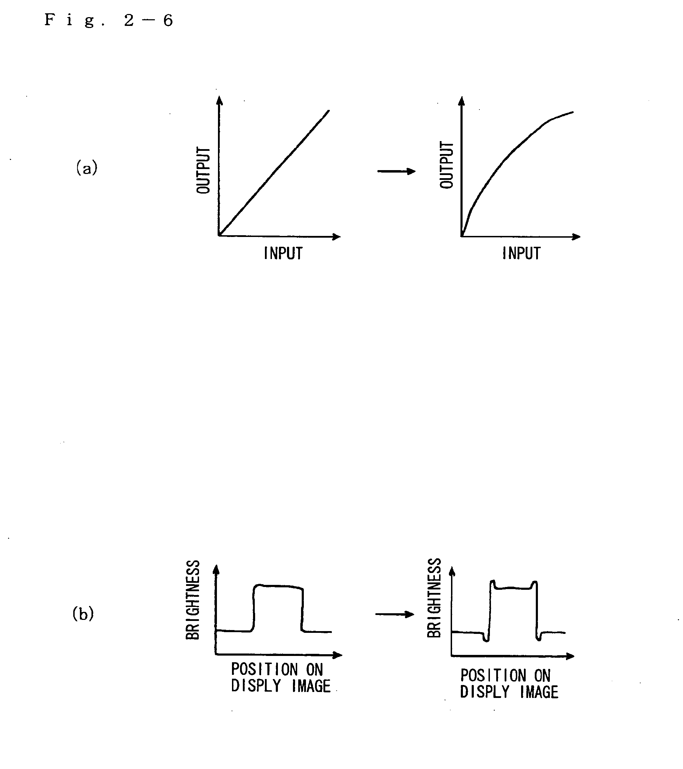

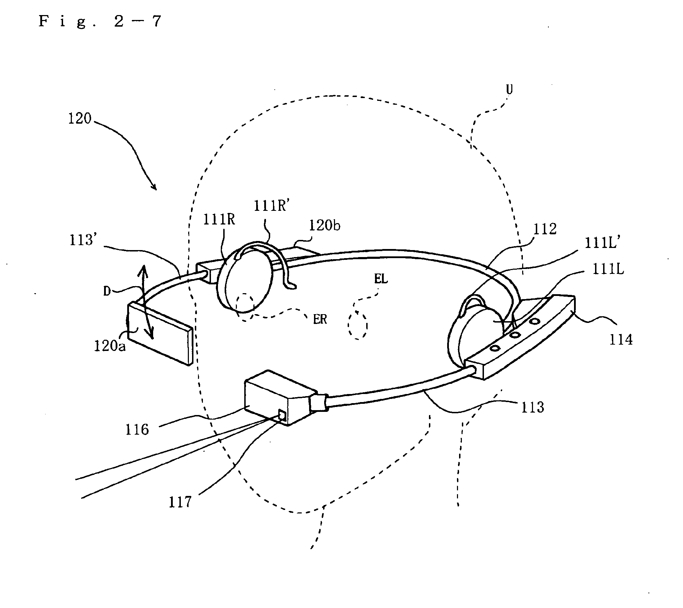

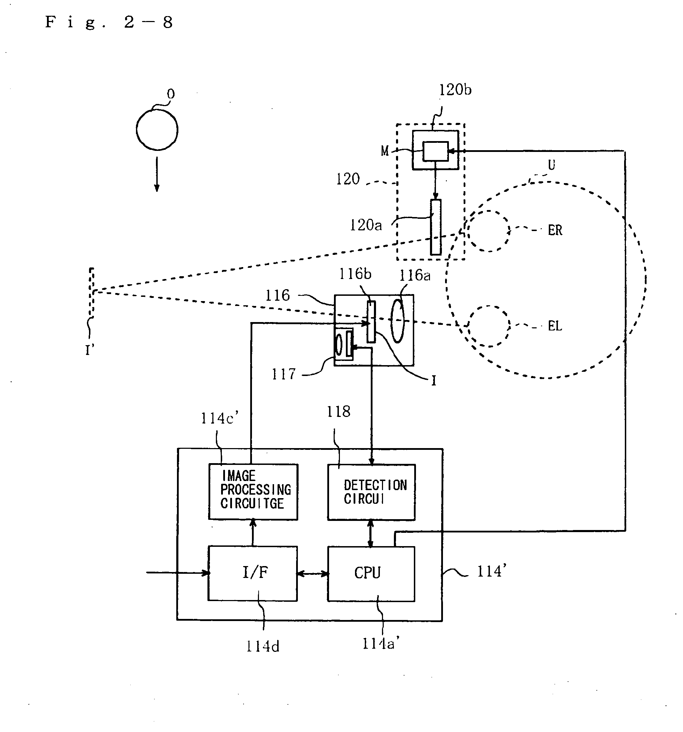

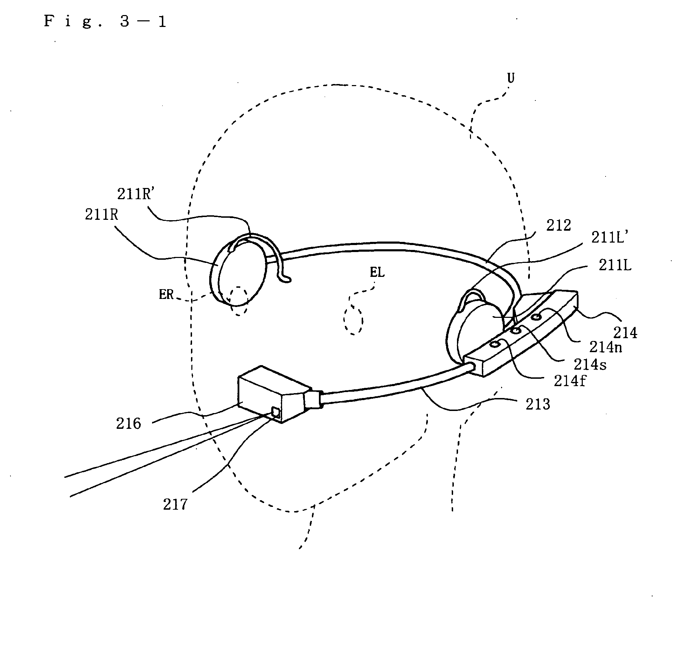

Figure 2-3 is a diagram illustrating one example of a contrast emphasis method.
Figure 2-4 is a block diagram of the image sensor 117 and detection circuit 118 in Working Configuration 2-1.
Figure 2-5 is a diagram showing the operation of the near-eye display.
Figure 2-6 is a diagram illustrating one example of the brightness shifting method, and one example of the outline emphasis method.
Figure 2-7 is an overview of the near-eye display of Working Configuration 2-2.
Figure 2-8 is a block diagram of the display part 116, controller 114' and outside world light adjustment mechanism 120 of Working Configuration 2-2.

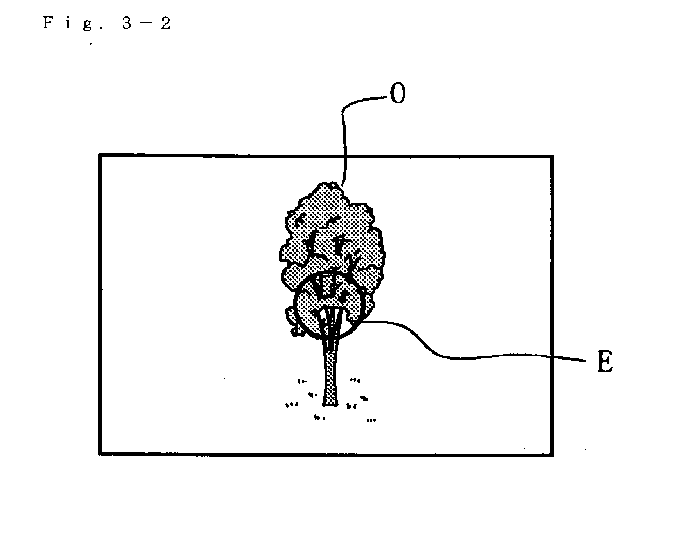

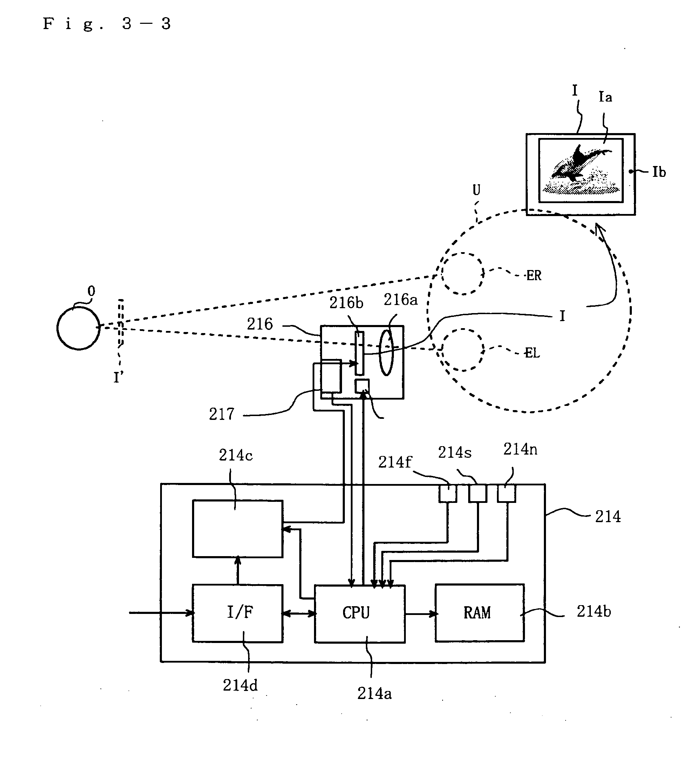

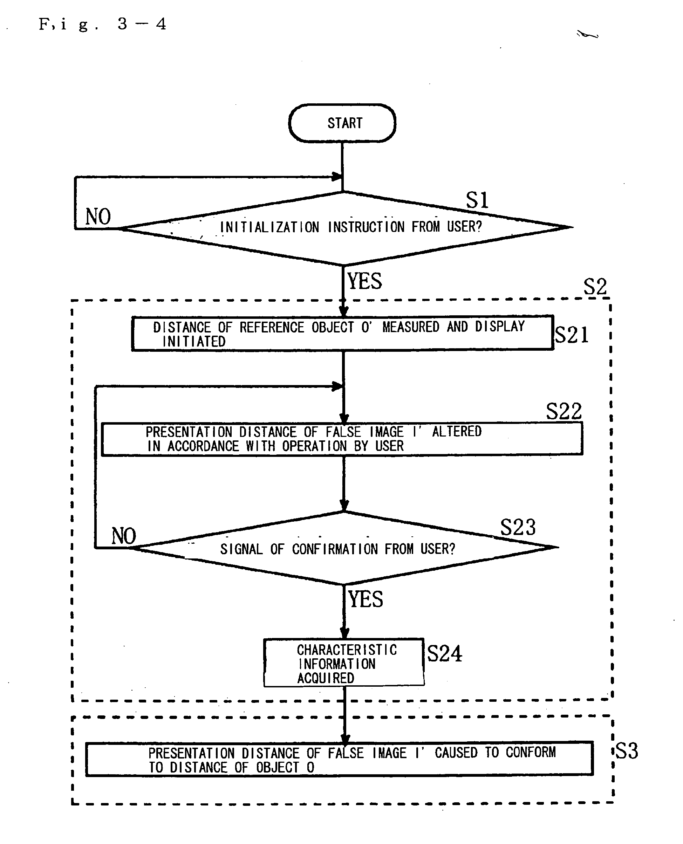

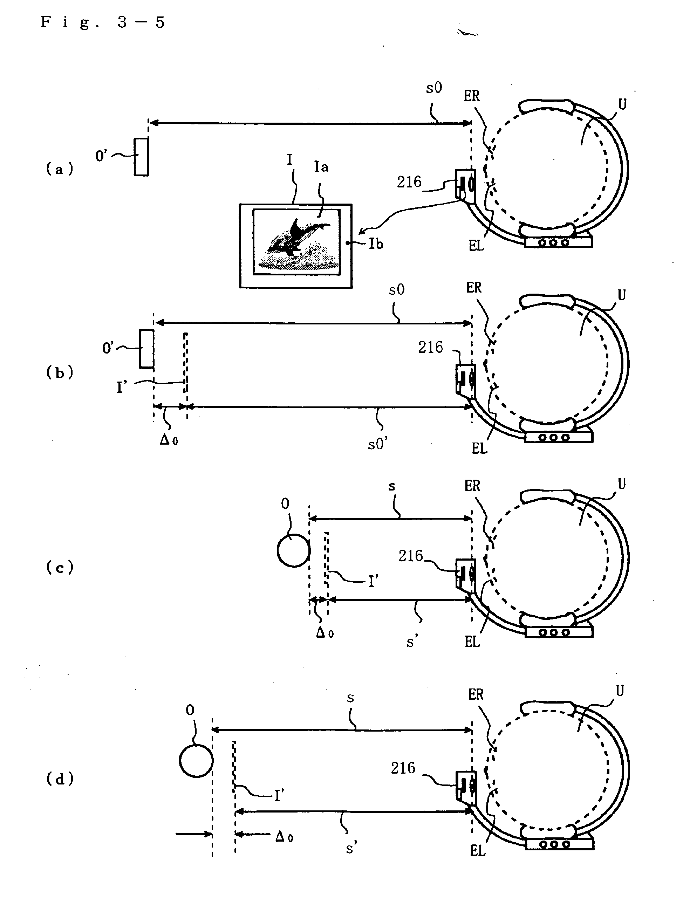

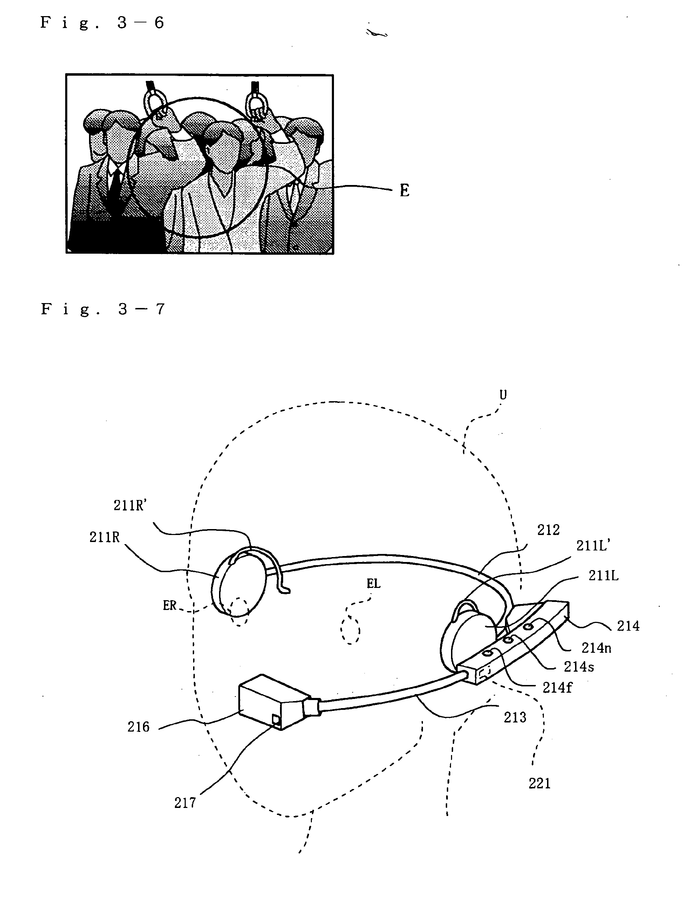

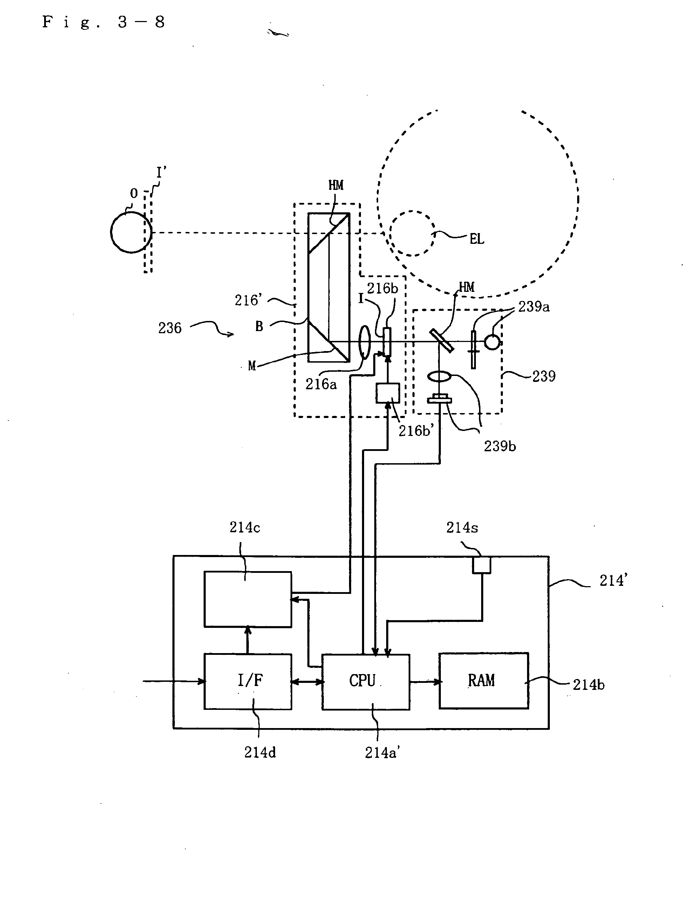

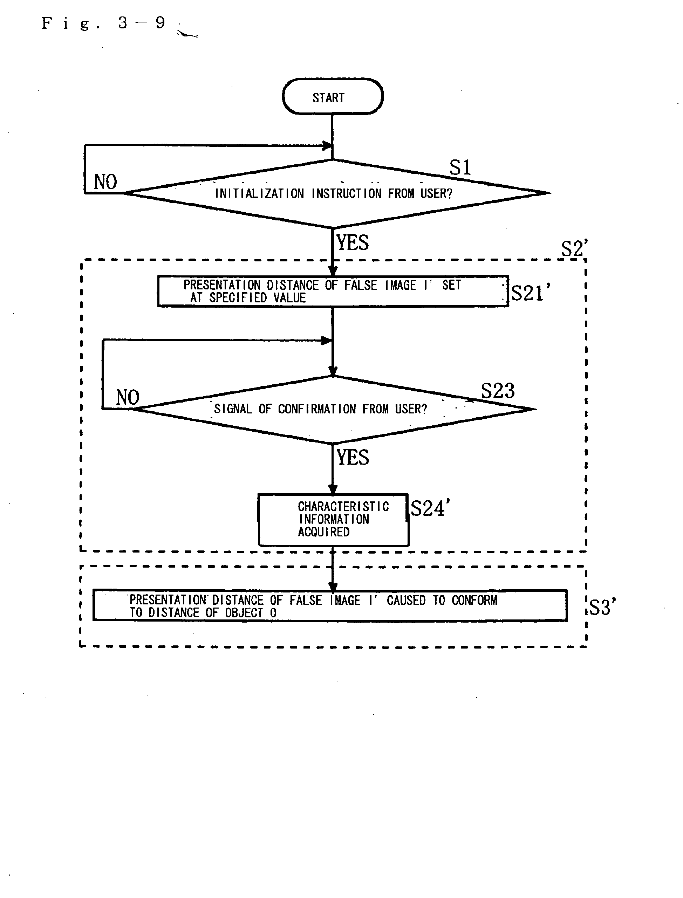

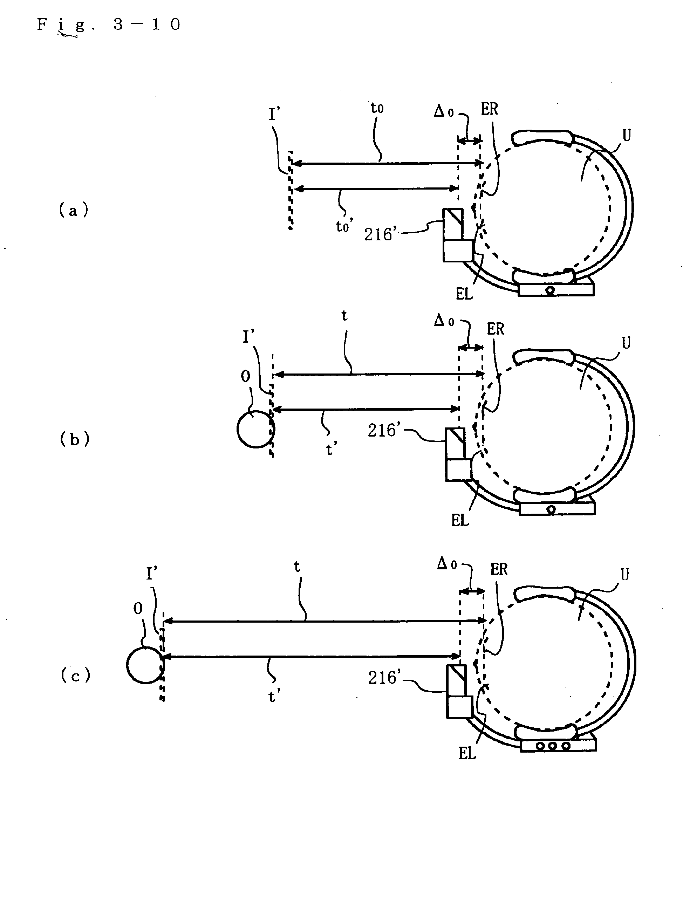

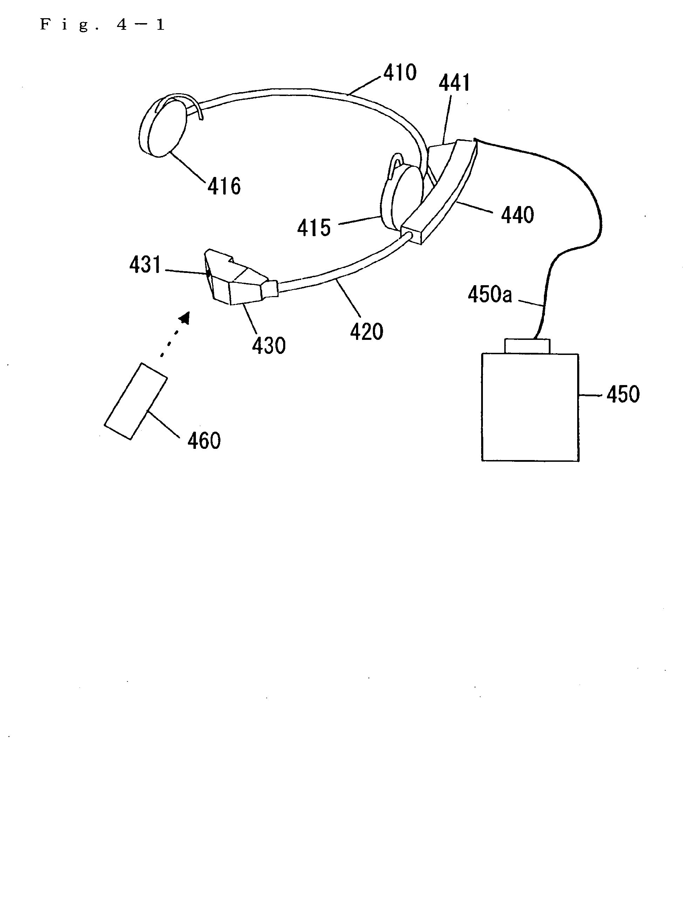

Figure 3-1 is an external view of the near-eye display of Working Configuration 3-1.
Figure 3-2 is a diagram showing the distance measurement object region E of the distance measurement sensor 217.
Figure 3-3 is a block diagram of the display part 216 and controller 214 of Working Configuration 3-1.
Figure 3-4 is an operating flow chart of the near-eye display of Working Configuration 3-1.
Figure 3-5 is a diagram showing the positional relationship of the near-eye display, reference object O', object O and virtual image I' of Working Configuration 3-1.
Figure 3-6 is a diagram illustrating a modified example of the near-eye display of Working Configuration 3-1.
Figure 3-7 is a diagram illustrating a modified example of the near-eye display of Working Configuration 3-1 or Working Configuration 3-2.
Figure 3-8 is a block diagram of the display part 16' and controller 14' of Working Configuration 3-2.
Figure 3-9 is an operating flow chart of the near-eye display of Working Configuration 3-2.
Figure 3-10 is a diagram showing the positional relationship of the near-eye display, object O and virtual image I' of Working Configuration 3-2.
Figure 4-1 is a perspective view of the head-mounted display device of Working Configuration 4-1 of the present invention.
Figure 4-2(a) is a plan view of the head-mounted display device of Working Configuration 4-1 of the present invention.
Figure 4-2(b) is a schematic diagram of the same.
Figure 4-3 is a block diagram of the front arm, video image display part and accommodating part.
Figure 4-4(a) is a plan view of the head-mounted display device of Working Configuration 4-2 of the present invention.
Figure 4-4(b) is a schematic diagram of the same.
Figure 4-5(a) is a plan view of the head-mounted display device of Working Configuration 4-3 of the present invention.
Figure 4-5(b) is a schematic diagram of the same.
Figure 4-6(a) is front view of the wireless remote controller of Working Configuration 4-4 of the present invention.
Figure 4-6(b) is a side view of the same.
Figure 4-7(a) is a front view of the wireless remote controller of Working Configuration 4-5 of the present invention.
Figure 4-7(b) is a side view of the same.
Figure 4-8(a) is front view showing a state in which the wireless remote controller is engaged in the controller.
Figure 4-8(b) is a conceptual diagram showing a sectional view of Figure 4-8(a).
Figure 4-9 is a perspective view of a head-mounted display device.
Figure 4-10 is a perspective view of another head-mounted display device.

### Best Mode for Carrying Out the Invention

Working configurations of the present invention will be described below with reference to the figures. Figure 1-1 is a diagram showing an outline of a head-mounted display constituting Working Configuration 1-1 of the present invention. This diagram is a sectional view which shows only the essential parts. Furthermore, this sectional view shows only the left half to which the display arm is attached.

The head-mounted display 1 comprises, as essential parts, a rear arm 2, an accommodating part 3 which is attached to the rear arm 2, a display arm 4 which is held so that this display arm can be accommodated in the accommodating part 3, a display part 5 which is attached to the tip end of the display arm 4 so that this display part 5 can pivot, and a headphones 6 which are disposed on both end parts of the rear arm 2. The rear arm 2 and one of the headphones 6 are also disposed on the right side.

An image display device 7 is disposed in the display part 5, and the system is devised so that the images displayed on the image display device 7 are reflected by a mirror 8, and are then enlarged and projected onto the retina of the user by an ocular optical system (lens) 9. The display part 5 is connected to the display arm 4 by a spherical-surface coupling 10, and is thus held so that this display part 5 is free to pivot on the tip end part of the display arm 4. The display arm 4 is held in the accommodating part 3 by four rollers 11, and is devised so that this display arm 4 can be accommodated inside the accommodating part 3 or pulled out of the accommodating part 3. Figure 1-1 shows a case in which the display arm 4 has been pulled out of the accommodating part 3, and the display part 5 is in the use state.

The flat cable 12 that supplies a power source and signals to the image display device 7 is pulled into the accommodating part 3 via a wiring attachment part 13, and is fastened to the accommodating part 3 by this wiring attachment part 13. Inside the accommodating part 3, an intermediate portion of the flat cable 12 is fastened in place by a wiring retainer 14. Subsequently, the flat cable 12 enters the display arm 4 from the rear end part of the display arm 4, further passes through the spherical-surface coupling 10, and is conducted to the image display device 7 inside the display part 5.

Figure 1-2 is a diagram showing a state in which the display arm 4 is accommodated inside the accommodating part 3. In the following figures, constituent elements that are the same as constituent elements in the preceding figures appearing in the section showing preferred working configurations for the purpose of working the present invention will be labeled with the same symbols, and a description of these constituent elements will be omitted.

In Figure 1-2, the display part 5 is pivoted so that this display art 5 faces in substantially the same direction as the direction of extension of the tip end part of the display arm 4, and is thus prevented from contacting the head of the user. Furthermore, since the display arm 4 is pulled in toward the rear, the flat cable 12 extending from the rear end part is arranged in a looped shape in which this flat cable 12 temporarily returns to the wiring retainer 14, and is then oriented toward the wiring attachment part 13. The flat cable 12 has a flat sheet shape showing length in a direction perpendicular to the plane of the page in the figure; accordingly, in cases where this cable is folded over as shown in the figure, the cable has flexibility, and can be folded over without applying an excessive amount of force.

Furthermore, since the flat cable 12 extending from the wiring attachment part 13 to the wiring retainer 14 can be fastened in place, the length of the flat cable 12 that moves inside the accommodating part 3 can be shortened, so that trouble caused by entanglement of the wiring or the like can be reduced.

Figure 1-3 is an enlarged view of part B in Figure 1-2. As is shown in this figure, the flat cable 12 is pulled out from the rear end part of the display arm 4. Here, as is shown in the figure, the rear end part 4a that contacts the flat cable 12 when the flat cable 12 is folded back is formed in a circular arc shape, and has no corner parts. Accordingly, there is little possibility of damage due to the application of a local force to the flat cable 12.

Figure 1-4 is a sectional view along line A-A in Figure 1-1. The outside part 5a of the display part 5 has a structure that is split into two parts, and a spherical-surface bearing part 5b is disposed in the central part. Meanwhile, the spherical-surface coupling 10 is fastened to the outside of the display arm 4, and is inserted into the spherical-surface bearing part 5b to form a spherical-surface bearing structure. The flat cable 12 is passed through the hollow part of the display arm 4.

In Working Configuration 1-1, as was described above, the cable from the outside enters the accommodating part 3 from the wiring attachment part 13 positioned on the rear part of the head, passes through the accommodating part 3 and display arm 4, and reaches the display part 5. Accordingly, the cable from the outside does not interfere with the work of the user, and does not cause any feeling of bother to the user. In the working configuration shown in Figure 1-1, the wiring attachment part 13 merely plays the role of fastening the flat cable 12. However, it would also be possible to use a connector as the wiring attachment part 13, and to make the outside cable removable from the accommodating part 3.

Figure 1-5 is a diagram showing an outline of a head-mounted display constituting Working Configuration 1-2 of the present invention. The method shown in this figure is the same as that in Figure 1-1. In this Working Configuration 1-2, a slide connector 15 consisting of a first contact part 15a and a second contact part 15b is provided; the first contact part 15a is disposed inside the accommodating part 3, and the second contact part 15b is attached to the vicinity of the rear end part of the display arm 4. The flat cable 12a that passes through the wiring attachment part 13 and enters the accommodating part 3 is wired as far as the first contact part 15a. Meanwhile, the flat cable 12b that is wired to the image display device 7 is connected to the second contact part 15b.

Figure 1-6 shows one example of the structure of the slide connector 15. As is shown in Figure 1-6(a), a number of plate-spring-form elastic conductors 15c equal to the number of wires are disposed on the first contact part 15a in the direction perpendicular to the plane of the page in the figure, and a number of plate-form conductors 15d equal to the number of wires are similarly disposed on the second contact part 15b. Furthermore, the respective wires from the flat cable 12a are connected to the plate-spring-form elastic conductors 15c, and the respective wires from the flat cable 12b are connected to the plate-form conductors 15d.

As is shown in the figures, when the first contact part 15a and second contact part 15b face each other, the plate-form conductors 15d push the plate-spring-form elastic conductors 15c downward against the elastic force of the plate-spring-form elastic conductors 15c, so that the plate-spring-form elastic conductors 15c and plate-form conductors 15d contact each other and establish electrical continuity. This state is the state shown in Figure 1-5. When the display arm 4 is moved from the state shown in Figure 1-5 so that this display arm 4 is accommodated inside the accommodating part 3, the state shown in Figure 1-7 results, and the second contact part 15b moves to the left side of Figure 1-6(a), so that the contact between the plate-spring-form elastic conductors 15c and the plate-form conductors 15d is eliminated, and the electrical continuity is broken.

In the construction shown in Figure 1-5, substantially all of the display arm 4 is accommodated inside the accommodating part 3. However, this is not absolutely necessary; the accommodating part 3 may also have a length that is equal to approximately half that of the side of the head, and may be devised so that this accommodating part 3 accommodates only a portion of the display arm 4 when the display arm 4 is retracted.

Figure 1-6(b) shows the second contact part 15b as seen from below in Figure 1-6(a). This is merely one example. As is shown in this figure, plate-form conductors 15d are installed for the ground, common power supply, and respective signals. Among these conductors, the plate-form conductor 15d corresponding to the ground is longest, the plate-form conductor 15d corresponding to the common power supply is next longest, and the plate-form conductors 15d corresponding to the respective signals are shorter than these first two conductors. Accordingly, when the display arm 4 is pulled out of the accommodating part 3, the wire corresponding to the ground is first connected; then the wire corresponding to the common power supply is connected, and then the wires corresponding to the respective signals are connected. When the display arm 4 is inserted into the accommodating part 3, the connections of the wires are broken in the reverse order. Accordingly, the power supply can be safely connected to and disconnected from the electrical circuits in the display part 5.

Figure 1-8 is a diagram showing an outline of a head-mounted display constituting Working Configuration 1-3 of the present invention. The method of graphic illustration is the same as that in Figure 1-5. This working configuration is substantially the same as Working Configuration 1-2 shown in Figure 1-5, but differs in that a separate first contact part 16a of the slide connector is disposed on the rear part of the accommodating part 3. The flat cable 12a that passes through the wiring attachment part 13 and enters the accommodating part 3 is split into two parts; one part is connected to the first contact part 15a, and the other part is connected to the separate first contact part 16a. When the display part 5 is in the use position as shown in Figure 1-8, the first contact part 15a and second contact part 15b contact each other. However, in a state in which the display arm 4 is accommodated in the accommodating part 3 as shown in Figure 1-9, the separate first contact part 16a and the second contact part 15b contact each other.

Here, the wiring to devices that can be used even in the state shown in Figure 1-9, such as a microphone, is connected in common to the first contact part 15a and the separate first contact part 16a; however, the wiring to devices that can be used only in the state shown in Figure 1-8, such as the signal wires used for image display, is connected only to the separate first contact part 16a. By doing this, it is possible to place necessary devices such as the microphone in an operating state even when the system is in a standby state during non-use as shown in Figure 1-9.

In Working Configuration 1-2 and Working Configuration 1-3 described above, unlike Working Configuration 1-1, there is no movement of the wiring inside the accommodating part 3. Accordingly, trouble that accompanies movement of the wiring, i.e., trouble such as entanglement of the wiring, wire breakage caused by fatigue, can be avoided. Furthermore, in the examples described above, electrical continuity was established by mechanical contact. However, in cases where little power consumption is required, mechanical contact can be eliminated if electrical continuity is obtained by electromagnetic coupling in which coils are caused to face each other. Accordingly, the useful life can be extended.

Below, Working Configuration 2-1 of the present invention will be described with reference to Figures 2-1, 2-2, 2-3, 2-4, 2-5 and 2-6. This working configuration is a working configuration of a near-eye display.

First, the overall construction of the near-eye display will be described.

As is shown in Figure 2-1, headphones 111R and 111L, a rear arm 112, a front arm 113, a controller 114, a display part (corresponding to the optical system in the Clams) 116, and the like are provided in this near-eye display.

The rear arm 112 and front arm 113 respectively have circular arc shapes that have a slightly greater curvature radius than the head of the user U.

The headphones 111R and 111L are respectively attached to both ends of the rear arm 112. A mounting member 111R' used for mounting on the right ear of the user U is attached to the headphone 111R, and a mounting member 111L' used for mounting on the left ear of the user U is attached to the headphone 111L (these correspond to the mounting means in the Claims).

The display part 116 is attached to one end of the front arm 113. The other end of the front arm 113 is connected to one end of the rear arm 112 via the controller 114.

The controller 114 is disposed at some point on the overall arm consisting of the front arm 113 and rear arm 112 (in Figure 2-1, this controller 114 is disposed on the connecting part between the front arm 113 and rear arm 112).

When the headphones 111R and 111L are respectively mounted on the right ear and left ear of the user U via the mounting members 111R' and 111L', the display part 116 is positioned in front of one eye EL (the left eye in Figure 2-1) of the user U.

This eye EL is the eye that views images, while the other eye ER is the eye that views the outside world. Below, the former eye is referred to as the "observing eye," while the latter eye is referred to as the "non-observing eye."

Incidentally, an adjustment mechanism consisting of an extension and retraction mechanism, a rotary mechanism, or the like (not shown in the figures) is disposed at some point on the overall arm consisting of the rear arm 112 and front arm 113 in order to withdraw only the display part 116 from in front of the observing eye EL in this state, or to adjust the position or angle of the display part 116. Incidentally, the connecting part between the rear arm 112 and the front arm 113 (location where the controller 114 is installed) has an extension and retraction mechanism, so that the gap between the observing eye EL and the display part 116 can be adjusted.

Furthermore, in the near-eye display of the present working configuration, an image sensor (compact video camera) 117 is disposed in the display part 116 (this corresponds to the detection means in the Claims).

The resolution, frame speed, and the like of the image sensor 117 are comparable to those of an observation video camera or the like used to detect moving objects.

The range of the objects of detection of this image sensor 117 is substantially the same as the range of the outside world that can be viewed by the user U in an image-viewing state (hereafter referred to simply as the "visual field"). Accordingly, the output of the image sensor 117 indicates the image of the outside world that can be viewed by the user U (this image is hereafter referred to as the "visual field image").

Next, the internal construction of the display part 116 and controller 114 of the present working configuration will be described.

As is shown in Figure 2-2, a lens 116a and a display element 116b are disposed in that order from the side of the observing eye EL inside the display part 116. The display screen I of the display element 116b faces toward the observing eye EL.

A lens 117a and an image pickup element 117b are disposed in that order from the side of the outside world inside the image sensor 117 of the display part 116.

A CPU (corresponding to the control means in the Claims) 114a, an image processing circuit 114c, an external interface circuit 114d and a detection circuit (corresponding to the detection means in the Claims) 118 are provided inside the controller 114.

As is shown in Figure 2-4 (described later), a differential circuit 118a, an evaluation value extraction circuit 118b and a threshold circuit 118c are provided inside the detection circuit 118.

Furthermore, the display part 116 and controller 114 are electrically connected via a connecting line not shown in the figures.

Next, the basic operation of the near-eye display of the present working configuration will be described.

Video signals from an external device such as a DVD player are successively input into the controller 114. The video signals are successively input into the display element 116b inside the display part 116 via the external interface circuit 114d and image processing circuit 114c inside the controller 114. As a result, video images are displayed on the display screen I of the display element 116b (these images are hereafter referred to as "display images").

The image processing circuit 114c performs halftone conversion processing, two-dimensional image processing, and the like on the successively input video signals, and thus converts the video signals into a state that is suitable for the display element 116b.

The image processing circuit 114c in the present working configuration can also perform contrast emphasis (brightness range enlargement) processing on the successively input video signals.

As a result of this processing, the relative emphasis of the display images with respect to the outside world can be heightened.

This contrast emphasis is performed in accordance with instructions from the CPU 114a.

Incidentally, the contrast emphasis corresponds to a variation in the halftone conversion characteristics of the image processing circuit 114c, for example, from Figure 2-3(a) to Figure 2-3(b). (Furthermore, the variation shown in Figure 2-3 subjects only the intermediate brightness range to contrast emphasis; however, the effect obtained is substantially the same as that obtained when the entire brightness range is subjected to contrast emphasis.)

The light beam emitted from the display screen I passes through the lens 116a, and is incident on the observing eye EL of the user U. The lens 116a causes the light beam that is emitted from the display screen I to approach a parallel bundle of rays. Accordingly, a virtual image I' of the display screen I is presented in a position that is further removed from the observing eye EL than the actual position of the display screen I.

Meanwhile, as is shown in Figure 2-4, the light beam that is incident on the image sensor 117 from the outside world passes through the lens 117a, and is focused as an image on the image pickup element 117b.

The image pickup element 117b performs image pickup at a specified frame speed, thus repeatedly acquiring frame data indicating visual field images, and successively outputs this data.

Accordingly, periodic variations in the brightness distribution occurring within the visual field at a speed higher than the frame speed (e.g., variations that cannot be recognized by the brain of the user U, such as the flickering of a fluorescent lamp) are not reflected in the frame data.

The frame data is input into the differential circuit 118a within the detection circuit 118. The differential circuit 118a takes the difference (see Figure 2-4(b)) between adjacent frame data (see Figure 2-4(a)). This differential data is input into the evaluation value extraction circuit 118b.

The evaluation value extraction circuit 118b determines the integrated value (area of the shaded portion in Figure 2-4(b)) of the absolute value of the differential data, and takes this integrated value as an evaluation value (see Figure 2-4(c)).

Such an evaluation value corresponds to the amount of variation in the brightness distribution of the visual field image within one frame period (i.e., the rate of variation in the brightness distribution based on a frame speed).

This evaluation value is input into the threshold circuit 118c. The threshold circuit compares the evaluation value with a predetermined threshold value, and produces a detection signal (see Figure 2-4(d)) only in cases where the evaluation value exceeds the threshold value.

Accordingly, such a detection signal is produced only when the rate of variation in the brightness distribution of the visual field image is equal to or greater than a given value.

Furthermore, the threshold value of the threshold circuit 118c is set at an appropriate value on the basis of experimental results obtained beforehand so that no detection signal is generated when the rate of variation in the brightness distribution of the visual field image is so gradual that this variation cannot be recognized by the brain of the user U (e.g., when the visual field image shows a calm sky or the like).

The detection signal thus generated by the detection circuit 118 is sent to the CPU 114a. The CPU 114a controls various parts in accordance with this detection signal.

Next, the flow of the operation of the near-eye display of the present working configuration will be described. Furthermore, the flow of this operation is controlled by the CPU 114a.

The user U uses this near-eye display in his own desired location. In this case, video images (display images) from an external device are displayed on the display screen I (see Figure 2-2). The attention of the user U is concentrated on these display images.

In the near-eye display, the image sensor 117 and detection circuit 118 operate in connection, so that a detection signal is generated only when the rate of variation in the brightness distribution of the visual field image is equal to or greater than a given value (see Figure 2-4). When a detection signal is generated, the image processing circuit 114c immediately initiates contrast emphasis processing (see Figure 2-3). This contrast emphasis processing is continued for a specified period of time.

The series of processing operations from the operations of the image sensor 117 and detection circuit 118 to the contrast emphasis are continuously repeated.

Next, the effect of the near-eye display of the present working configuration will be described.

In this near-eye display, when the attention of the user U is concentrated on the display images, if the position or size of an object O present within the visual field varies within a given speed range as shown, for example, in Figure 2-5(a), then the contrast of the display image is heightened so that the display image is emphasized as shown, for example, in Figure 2-5(b). Similarly, the contrast of the display image is also heightened so that the display image is emphasized even in cases where the brightness of an object O present within the visual field varies within a given speed range.

Accordingly, this near-eye display attracts the attention of the user U to the display image at the timing at which conditions begin to vary within the visual field, thus preventing switching inside the brain of the user U, so that the feeling of immersion of the user U in the display image can be maintained.

Furthermore, high-speed periodic variations that cannot be recognized by the brain of the user U, such as the flickering of a fluorescent lamp, are not reflected in the frame data. Moreover, low-speed variations that can hardly be recognized by the brain of the user U, such as variations in a calm sky, do not produce any detection signal. Accordingly, the frequency of the contrast emphasis processing described above can be kept to the required minimum.

### (Other)

Moreover, the time period of the contrast emphasis was set as a "specified time period"; the reason for this is that once a variation in the conditions of the outside world has occurred, there is a high possibility of the subsequent repeated occurrence of this variation.

In addition, if the degree of contrast emphasis is suddenly varies, there is a possibility that the user U will experience an uncomfortable feeling. Accordingly, the system may be devised so that the degree of emphasis is gradually weakened, for example, when the contrast emphasis period is ended. Moreover, the system may also be devised so that the degree of emphasis is gradually strengthened when the contrast emphasis period is initiated.

Furthermore, it would also be possible to perform control that shows a flexible response to the manner of variation in the conditions of the outside world, e.g., lengthening the time period of contrast emphasis when the frequency of occurrence of detection signals is high.

In addition, in the present working configuration, contrast emphasis of the video signals is performed in order to emphasize the display images; however, a brightness shift (shift to the high brightness side) may also be performed instead of contrast emphasis.

Incidentally, such a brightness shift corresponds to a variation in the halftone conversion characteristics of the image processing circuit 114c as shown, for example, in Figure 2-6(a). (Furthermore, the variation shown in Figure 2-6(a) causes a brightness shift of only a relatively low brightness range; however, the effect obtained is substantially the same as that obtained when the entire brightness range is subjected to a brightness shift).

Moreover, a silhouette emphasis may also be performed instead of a contrast emphasis. This silhouette emphasis corresponds to a variation in the brightness distribution of the display image as shown, for example, in Figure 2-6(b).

Furthermore, besides a method in which the video signals are subjected to a conversion, some other method such as adjustment of the intensity of the illuminating light of the display element 116b may be used as the method that varies the brightness of the display images.

Likewise, besides a method in which the video signals are subjected to a conversion, some other method such as adjustment of the driving voltage of the display element 116b may be used as the method that varies the contrast of the display images.

In addition, two or more of the methods of contrast emphasis, brightness shift and silhouette emphasis may be used in combination as the method that emphasizes the display images.

Working Configuration 2-2 of the present invention will be described below with reference to Figures 2-7 and 2-8.

The present working configuration is a working configuration of a near-eye display. Here, only the points that differ from Working Configuration 2-1 will be described.

As is shown in Figure 2-7, the first point of difference is that an outside world light adjustment mechanism 120 is provided. This outside world light adjustment mechanism 120 performs an operation that takes the place of the contrast adjustment in Working Configuration 2-1. (Accordingly, there is no need for the image processing circuit 114c' of the present working configuration to perform a contrast adjustment.)

The outside world light adjustment mechanism 120 consists of a light-reducing plate 120a, a front arm 113', a rotary mechanism 120b, and the like.

The light-reducing plate 120a is attached to one end of the front arm 113'. The front arm 113' is connected to the rear arm 112 symmetrically with the front arm 113.

When the headphones 111R and 111L are respectively mounted on the right ear and left ear of the user U via the mounting members 111R' and 111L', the light-reducing plate 20a is positioned in front of the non-observing eye ER of the user U.

The rotary mechanism 120 can move the light-reducing plate 120a in the direction indicated by the arrow D in Figure 2-7 via the front arm 113'.

The light-reducing plate 120a is disposed in front of the non-observing eye ER, or is withdrawn from in front of the non-observing eye ER.

The light-reducing plate 120a disposed in front of the non-observing eye ER cuts a portion of the light quantity of the light beam that is incident on the non-observing eye ER from the outside world, and thus suppresses the brightness of the outside world as seen from the non-observing eye ER. The transmissivity of the light-reducing plate 120a is comparable to the transmissivity of ordinary sunglasses or the like.

Accordingly, when the rotary mechanism 120b is driven so that the light-reducing plate 120a is disposed in front of the non-observing eye ER, the relative degree of emphasis of the display images (images appearing on the display screen I) with respect to the outside world is heightened, and when the light-reducing plate 120a is withdrawn from in front of the non-observing eye ER, the relative degree of emphasis of the display images returns to the original degree of emphasis.

A motor M which drives the rotary mechanism 120b is installed inside the rotary mechanism 120b as shown in Figure 2-8, and this motor M operates in accordance with instructions from the CPU 114a' inside the controller 114'.

Accordingly, the degree of emphasis of the display images can be controlled by the CPU 114a'.

Next, the flow of operation of the near-eye display of the present working configuration will be described. Furthermore, the flow of this operation is controlled by the CPU 114a'.

The user U uses this near-eye display in his own desired location. In this case, video images (display images) from an external device are displayed on the display screen I (see Figure 2-8). The attention of the user U is concentrated on these display images. In this case, the rotary mechanism 120b causes the light-reducing plate 120a to be withdrawn from in front of the non-observing eye ER.

In the near-eye display, the image sensor 117 and detection circuit 118 operate in connection, so that a detection signal is generated only when the rate of variation in the brightness distribution of the visual field image is equal to or greater than a given value (see Figure 2-4). When a detection signal is generated, the rotary mechanism 120b immediately disposes the light-blocking plate 120a in front of the non-observing eye ER. After a specified period of time has elapsed, the rotary mechanism 120b again causes the light-reducing plate 120a to be withdrawn from in front of the non-observing eye ER.

This series of processing operations from the operations of the image sensor 117 and detection circuit 118 to the movement of the light-reducing plate 120a are continuously repeated.

Furthermore, the movement of the light-reducing plate 120a (disposition of the light-reducing plate 120a in front of the non-observing eye ER) is performed only when the frequency of occurrence of the detection signal is equal to or greater than a given frequency.

Next, the effect of the near-eye display of the present working configuration will be described.

In this near-eye display, when the attention of the user U is concentrated on the display images, if the position or size of an object O present within the visual field varies within a given speed range as shown, for example, in Figure 2-5(a), the apparent brightness of the outside world is reduced, so that the display images are emphasized in relative terms. Similarly, even if the brightness of an object O present within the visual field varies within a given speed range, the apparent brightness of the outside world is reduced, so that the display images are emphasized in relative terms.

Accordingly, like the near-eye display of Working Configuration 2-1, this near-eye display attracts the attention of the user U toward the display images at the timing at which the conditions within the visual field begin to vary, thus preventing switching inside the brain of the user U, so that the feeling of immersion of the user U in the display images can be maintained.

Furthermore, high-speed periodic variations that cannot be recognized by the brain of the user U, such as the flickering of a fluorescent lamp, are not reflected in the frame data. Moreover, low-speed variations that can hardly be recognized by the brain of the user U, such as variations in a calm sky, do not produce any detection signal. Accordingly, the frequency of the movement of the light-reducing plate 120a can be kept to the required minimum.

### (Other)

In addition, in the present working configuration, a light-reducing plate 20a was used in order to suppress the apparent brightness of the outside world; however, it would also be possible to use a light-blocking plate.

Moreover, in the present working configuration, a movable member (light-reducing plate 120a), a mechanism for driving this member (rotary mechanism 120b), and the like were used in order to vary the apparent brightness of the outside world; however, it would also be possible to use a light-reducing element with a variable transmissivity (liquid crystal element or the like).

### [Other]

Furthermore, it would also be possible to install a sensor (acceleration sensor or the like) that detects movements of the user U himself (movements when the neck is intentionally moved or the like) in the near-eye displays of the respective working configurations described above, and to construct the system so that emphasis of the display images is prohibited regardless of the presence or absence of detection signals in cases where variations in the brightness distribution occurring within the visual field are only variations caused by movements of the user U himself. If this is done, the frequency of emphasis can be further reduced.

Moreover, the location where the image sensor 117 was installed in the near-eye displays of the respective working configurations described above was the display part 116; however, this may also be some other location such as the headphone 111R or 111L, as long as this location can cover the visual field in the range that is the object of detection.

Furthermore, in the respective working configurations described above, an image sensor 117 that detected the brightness distribution of the visual field was used in order to detect variations in the conditions of the visual field. However, in order to simplify the processing in the detection circuit 18, it would also be possible to use a brightness sensor that detects only the mean brightness of the visual field instead of the image sensor 117.

Alternatively, it would also be possible to use a distance measuring sensor that detects variations in the distance of an object O present in the visual field in order to detect variations in the conditions of the visual field.

Furthermore, it would also be possible to construct the near-eye displays of the respective working configurations described above so that switching is possible between a mode in which the display images are emphasized in accordance with the rate of variation in the conditions (concentration mode), and a mode in which the display images are not emphasized regardless of the rate of variation in the conditions (non-concentration mode).

For example, when the user U uses the near-eye display in a safe location such as an indoor location, the display is set in the "concentration mode," and when the user uses the near-eye display in a location that is not necessarily safe, the display is set in the "non-concentration mode."

Thus, if the use of the display is divided between a "concentration mode" and a "non-concentration mode," a feeling of immersion in the display images can be obtained only when necessary.

Working Configuration 3-1 of the present invention will be described below with reference to Figures 3-1, 3-2, 3-3, 3-4, 3-5, 3-6 and 3-7. The present working configuration is a working configuration of a near-eye display.

First, the overall construction of the near-eye display will be described.

As is shown in Figure 3-1, headphones 211R and 211L, a rear arm 212, a front arm 213, a controller 214, a display part (corresponding to the optical system in the Claims) 216, and the like are provided in this near-eye display.

The rear arm 212 and front arm 213 respectively have circular arc shapes that are slightly on the large side in order to allow mounting on the head of the user U.

The headphones 211R and 211L are respectively attached to both ends of the rear arm 212. A mounting member 211R' used for mounting on the right ear of the user U is attached to the headphone 211R, and a mounting member 211L' used for mounting on the left ear of the user U is attached to the headphone 211L (these members correspond to the mounting means in the Claims).

The display part 216 is attached to one end of the front arm 213. The other end of the front arm 213 is connected to one end of the rear arm 212.

The controller 214 is disposed at some location on the overall arm consisting of the front arm 213 and rear arm 212 (on the connecting part of the front arm 213 and rear arm 212 in Figure 3-1). A setting button 214s used to input the signal of the user U into the near-eye display is disposed, for example, on the outer wall of the upper surface of the controller 214.

When the headphones 211R and 211L are respectively mounted on the right and left ears of the user U via the mounting members 211R' and 211L', the display part 216b is disposed in front of one eye EL (the left eye in Figure 3-1) of the user U.

This eye EL is the eye that views the virtual image I' (described later), while the other eye ER is the eye that views the outside world. Below, the former eye will be referred to as the "observing eye," while the latter eye will be referred to as the "non-observing eye."

Incidentally, an adjustment mechanism consisting of an extension and retraction mechanism, a rotary mechanism, or the like (not shown in the figures) is disposed at some point on the overall arm consisting of the rear arm 212 and front arm 213 in order to withdraw only the display part 216 from in front of the observing eye EL in this state, or to adjust the position or angle of the display part 216. Incidentally, the connecting part between the rear arm 212 and the front arm 213 (location where the controller 214 is installed) has an extension and retraction mechanism, so that the gap between the observing eye EL and the display part 216 can be adjusted.

Furthermore, in the near-eye display of the present working configuration, a distance measuring sensor 217 such as an infrared type sensor is disposed in the display part 16 (this corresponds to the sensor means in the Claims).

The measurement precision, measurement resolution, measured distance, and the like of the distance measuring sensor 217 may be comparable to those of a distance measuring sensor used in a common camera or the like.

As is shown in Figure 3-2, the measurement object region E of this distance measuring sensor 217 is set as a relatively narrow region (equivalent to the focus area of the camera) in the vicinity of the center of the visual field of the user U (here, the visual field of the non-observing eye ER (hereafter referred to simply as the "visual field")). Furthermore, for the sake of simplicity, the visual field is indicated as a rectangle in Figure 3-2.

Accordingly, the output of the distance measuring sensor 217 indicates the distance s of an arbitrary object O (a tree in Figure 3-2) that is present near the center of the visual field (i.e., the distance of this object O with reference to the display part 16).

Furthermore, besides a setting button 214s, operating buttons 214f and 214n are disposed as shown in Figure 3-1 on the outer wall of the controller 214 of the present working configuration (these buttons correspond to the acquisition means in the Claims; details will be described later).

Next, the internal construction of the display part 216 and controller 214 of the present working configuration will be described.

As is shown in Figure 3-3, a lens 216a and a display element 216b are disposed in that order from the side of the observing eye EL inside the display part 216. The display screen I of the display element 216b faces toward the observing eye EL. In addition, a display element driving part 216b' is provided in the display part 216 (this corresponds to the varying means in the Claims).

A CPU (corresponding to the control means in the Claims) 214a, a RAM 214b, an image processing circuit 214c, and an external interface circuit 214d are provided inside the controller 214.

Furthermore, the display part 216 and controller 214 are electrically connected via a connecting line not shown in the figures.

Next, the basic operation of the near-eye display of the present working configuration will be described.

Video signals from an external device such as a DVD player are input into the controller 214. The video signals are input into the display element 216b inside the display part 216 via the external interface part 214d and image processing circuit 214c inside the controller 214. As a result, video images are displayed on the display screen I of the display element 216b.

Furthermore, as is shown in Figure 3-3, the display screen I in the present working configuration has a character display region Ib that displays character images (character information) in addition to an image display region Ia that displays video images. The display of character information is realized by the CPU 214a sending instructions to the image processing circuit 214c.

The light beam emitted from the display screen I passes through the lens 216a, and is incident on the observing eye EL of the user U. The lens 216a causes the light beam emitted from the display screen I to approach a parallel bundle of rays. Accordingly, a virtual image I' of the display screen I is presented in a position that is more removed from the observing eye EL than the actual position of the display screen I.

The display element 216b can be moved in the direction of the visual axis of the observing eye EL by the display element driving part 216b'. When the display element 216b moves in the direction of the visual axis, the presentation distance s' of the virtual image I' (i.e., the distance of the virtual image I' with reference to the display part 216) varies accordingly.

The amount of driving of the display element driving part 216b' in this case is controlled by the CPU 214a. Accordingly, the amount of movement of the display element 216b (and therefore the presentation distance s' of the virtual image I') is controlled by the CPU 214a.

The CPU 214a controls various parts in accordance with signals from the setting button 214s, operating buttons 214f and 214n, and distance measuring sensor 217.

The operating button 214f is a button used by the user U in order to cause the presentation position of the virtual image I' to move further away from the user himself, and the operating button 214n is a button used by the user U in order to cause the presentation position of the virtual image I' to move closer to the user himself (the operation of the near-eye display in such cases will be described later).

Next, the characterizing parts (initialization, eye fatigue reducing operation) of the flow of operation of the near-eye display of the present working configuration will be described. Furthermore, the flow of this operation is controlled by the CPU 214a.

As is shown in Figure 3-4, an operation used for initialization (step S2 in Figure 3-4) and an eye fatigue reducing operation (step S3 in Figure 3-4) are successively performed.

The operation used for initialization (step S2 in Figure 3-4) is initiated at the point in time at which there is an instruction for initialization from the user U via the setting button 214s (YES in step S1 in Figure 3-4).

As is shown in Figures 3-5(a) and 3-5(b), the user U places a reference object O' used for initialization (background, column, wall ornament, or the like) in front of himself in a position where this object can be viewed.

In this case, in the near-eye display, the distance measuring sensor 217 performs distance measurement, the distance s of the reference object O' is recognized from the output of the distance measuring sensor 217, and character information ("1 m" or the like) indicating this distance s (measured distance) is displayed in real time in the character display region Ib of the display screen I (step S21 in Figure 3-4).

This processing from distance measurement to display is continuously repeated. Accordingly, the measured distance that is displayed accurately indicates the distance s of the reference object O' at that point in time.

In this case, furthermore, video images or specified reference images input from an external device are displayed in the image display region Ia of the display screen I.

Then, while viewing the reference object O' with the non-observing eye ER, the user U gradually increases the gap between himself and the reference object O' as shown in Figure 3-5(a), and stops this increase at the point in time at which the reference object O' begins to blur.

Character information ("2 m" or the like) that indicates the measured distance s in this state is displayed on the display screen I. Incidentally, the measured distance s in this state (i.e., the distance of the reference object O') corresponds to the far point of the non-observing eye ER.

Furthermore, the user U views the reference object O' in this state with the non-observing eye ER, and views the virtual image I' of the display screen I with the observing eye EL.

Moreover, by operating the operating buttons 214f and 214n, the user U adjusts the presentation distance s' of the virtual image I' so that the reference object O' and virtual image I' can be respectively viewed as comfortably as possible. In other words, the presentation distance s' of the virtual image I' is adjusted so that the tension of the observing eye EL and the tension of the non-observing eye ER are comparable.

Then, at the point in time at which viewing can be accomplished most comfortably, a signal of confirmation is transmitted to the near-eye display by operating the setting button 214s.

Furthermore, when the operating button 214f is operated, the near-eye display lengthens the presentation distance s' of the virtual image I' by a distance corresponding to the amount of operation of this button. Likewise, when the operating button 214n is operated, the presentation distance s' of the virtual image I' is shortened by a distance corresponding to the amount of operation of this button (step S22 in Figure 3-4).

Moreover, in the near-eye display, when a signal of confirmation is given (YES in step S23 of Figure 3-4), the distance so of the reference object O' and the presentation distance so' of the virtual image I' at this point in time are recognized (see Figure 3-5(b)).

Here, as is also shown in Figure 3-5(b), the distance so of this reference object O' and the presentation distance so' of the virtual image I' do not coincide, so that an offset Δ₀ that is characteristic of the user U is generated (s₀' = s₀ - Δ₀).

The reason for this is as follows: namely, the visual acuity of the non-observing eye ER and the visual acuity of the observing eye EL often do not coincide; furthermore, the positional relationship of the non-observing eye ER and observing eye EL to the display part 216 varies according to the user U, and even in the case of the same user U, this positional relationship also varies according to the mounting conditions of the near-eye display.

Accordingly, the offset Δ₀ may be viewed as information relating to the difference in visual acuity between the observing eye EL and the non-observing eye ER, and information relating to the mounted state of the near-eye display (characteristic information).

In the near-eye display, the difference (s₀ - s₀') between the distance s₀ of the reference object O' and the presentation distance so' of the virtual image I' is determined as the offset Δ₀, and information relating to this offset Δ₀ is stored in the RAM 214bb (step S24 in Figure 3-4).

Here, when the offset Δ₀ is determined, units of refractive power (diopter "Dp") are used as the units of the distance so of the reference object O' and the presentation distance so' of the virtual image I'. For example, so and so' are respectively expressed by the refractive power values required in order for the eye located in a specified position with reference to the display part 216 to focus the reference object O' and virtual image I'.

Subsequently, as is shown, for example, in Figures 3-5(c) and 3-5(d), the user U uses this near-eye display in his own desired location. Furthermore, Figures 3-5(c) and 3-5(d) show the respective conditions when the user U directly faces an arbitrary object O, and approaches or moves away from this object O.

In this case, video images input from an external device (images desired by the user U) are displayed in the image display region Ia of the display screen I.

In the near-eye display, the distance measuring sensor 217 measures the distance, the distance s of the object O is recognized from the output of the distance measuring sensor 217, and the presentation distance s' of the virtual image I' is set in the vicinity of the distance s of the object O in accordance with the distance s of the object O and the information relating to the offset Δ₀ that is stored in the RAM 214b.

This processing from distance measurement to setting is continuously repeated. Accordingly, the presentation distance s' of the virtual image I' conforms to the distance s of the object O (step S3 in Figure 3-4; Figures 3-5(c) and 3-5(d)).

Here, the presentation distance s' of the virtual image I' is a distance obtained by correcting the distance s of the object O by the offset Δ₀ (s'= s ― Δ₀).

In this correction, the same units as those used for the distance so of the reference object O' and the presentation distance so' of the virtual image I' in the determination of the offset Δ₀ are respectively used as the units of the distance s of the object O and the presentation distance s' of the virtual image I'.

Incidentally, in this correction, as is shown in Figures 3-5(c) and 3-5(d), the difference in actual distance between the distance s of the object O and the presentation distance s' of the virtual image I' is reduced as the distance s of the object O becomes shorter.

Next, the effect of the near-eye display of the present working configuration will be described.

In this near-eye display, as was described above, the distance s of the object O is detected by the distance measuring sensor 217, and the presentation distance s' of the virtual image I' is set in accordance with the distance s of this object O. Accordingly, the presentation distance s' of the virtual image I' conforms to the distance s of the object O (see Figures 3-5(c) and 3-5(d)).

Here, the distance s of the object O corresponds to the approximate visual distance of the non-observing eye ER (approximate distance from the non-observing eye ER to the focal position).

Accordingly, the presentation distance s' of the virtual image I' conforms to the visual distance of the non-observing eye ER.

If the presentation distance s' of the virtual image I' thus conforms to the visual distance of the non-observing eye ER, then the direction of variation in the visual distance of the observing eye EL that observes the virtual image I' and the direction of variation in the visual distance of the non-observing eye ER that observes the outside world are the same. In other words, when the observing eye EL is tensed, the non-observing eye ER is also tensed, and when the observing eye EL is relaxed, the non-observing eye ER is also relaxed.

If both eyes thus show agreement in the direction of variation in the degree of tension, then the fatigue of both eyes is reduced.

Furthermore, since the distance measuring sensor 217 is a compact, high-performance sensor and is inexpensive, the variation in the visual distance of the non-observing eye ER can be simply and reliably detected.

Moreover, in this near-eye display, since the presentation distance s' of the virtual image I' is corrected in accordance with the offset Δ₀ that is peculiar to the user U (actually, the amount of driving of the display element driving part 216b' is corrected), various users U can be handled.

In addition, since this offset Δ₀ indicates the mounting conditions of the near-eye display as mounted by the user U, the near-eye display can handle various mounting conditions according to the user U.

Furthermore, since this offset Δ₀ expresses the difference in visual acuity between the observing eye EL and the non-observing eye ER, the near-eye display can handle various differences in visual acuity of respective users U.

In addition, since this near-eye display directly acquires characteristic information (i.e., the offset Δ₀) from the user U, the separate measurement of visual acuity differences and mounting conditions, and the storage of such information by the user U, can be omitted.

Furthermore, since this near-eye display can display information relating to the distances s of objects O, this display can also be used as a distance measuring device.

Moreover, since the display element 216b of the display part 216 can also be used as a means for displaying such information, the display is efficient.

### (Other)

Furthermore, as is shown in Figure 3-2, the disposition angle of the distance measuring sensor 217 and the spread angle of the measurement light beam are set so that the distance measurement object region E is narrow. However, as is shown in Figure 3-6, it would also be possible to set these values so that the object region E is broad. In this case, the mean distances of objects present in the visual field are measured, and the presentation distance s' of the virtual image I' conforms to such mean distances.

Moreover, the size of the distance measurement object region E may also be altered (or switched) by the user U. Such a near-eye display makes it possible to handle various conditions of the outside world (distribution of objects O and the like).

Furthermore, the information relating to the offset Δ₀ that is stored in the RAM 214b need not be the value of the offset Δ₀ itself, but may be other information indicating the offset Δ₀, e.g., information relating to the output signal of the distance measuring sensor 217, information relating to the position coordinates of the display element 216b, or the like.

In addition, in the determination of the offset Δ₀, the distance s of the reference object O' was set at a distance so corresponding to the far point of each user U; however, it would also be possible to set the distance s of the reference object O' at a specified distance. However, the offset Δ₀ can be determined with higher precision by setting the distance s at the distance s₀ corresponding to the far point.

Furthermore, the adjustment of the presentation distance of the virtual image I' at the time of initialization was accomplished by electrical driving; however, the near-eye display may also be constructed so that this is performed manually.

Moreover, the display of information relating to the distance s of the object O may also be omitted.

In addition, the near-eye display of the present working configuration may also be modified as follows:
Specifically, as is shown in Figure 3-7, a sensor 221 that detects variation in the positional relationship of the display part 216 and the observing eye EL is provided. For example, this sensor 221 is installed in the mechanism part of the front arm 213 and rear arm 212 or the like, and consists of an encoder or the like that detects the state of this mechanism part. If the amount of correction that is performed is varied in real time in accordance with the variation in the output of this sensor 221 (in the above description, this was caused to agree with the offset Δ₀), then variations in the mounting conditions of the near-eye display during use can also be handled.

Working Configuration 3-2 of the present invention will be described below with reference to Figures 3-8, 3-9 and 3-10.

The present working configuration is a working configuration of a near-eye display. Here, only points of difference from Working Configuration 3-1 will be described.

First, the points of difference will be described in general terms.

A point of difference from Working Configuration 3-1 is that the display part 216' is constructed as a see-through type display part.

Accordingly, the observing eye EL views both the outside world and the virtual image I'. This near-eye display reduces fatigue of such an observing eye EL.

Another point of difference of Working Configuration 3-2 is that a refractive power sensor 239 is provided instead of a distance measuring sensor 217.

A third point of difference is that the operating buttons 214f and 214n are omitted.

Next, the internal construction of the display part 216' and refractive power sensor 239 of the present working configuration will be described.

Since the display part 216' is a see-through type display part, only a half-mirror HM is disposed in front of the observing eye EL.

The light beam from the outside world and the light beam from the display element 216b are superimposed on this half-mirror HM, and are incident on the observing eye EL.

Furthermore, in Figure 3-8, the symbol I indicates a display screen, the symbol 216a indicates a lens, the symbol 216b' indicates a display element driving part, the symbol B indicates a light-transmitting substrate, and the symbol M indicates a mirror. The lens 216a, display element 216b and display element driving part 216b' have functions similar to those of the corresponding parts in Working Configuration 3-1.

The refractive power sensor 239 is attached to the display part 216', and the measurement light beam from the refractive power sensor 239 is projected onto the observing eye EL via this display part 216'. Moreover, the measurement light beam that is reflected by the fundus of the observing eye EL returns to the refractive power sensor 239 via the display part 216'.

The measurement light beam of the refractive power sensor 239 does not interfere with the observing eye EL viewing the outside world or virtual image I', and consists of light that has a safe wavelength (infrared light).

Furthermore, Figure 3-8 shows an example in which the measurement light beam from the refractive power sensor 239 is incident on the back side of the display element 216b (i.e., on the opposite side from the display screen I), and is then incident on the observing eye EL via the display element 216b, lens 216a, mirror M and half-mirror HM, in that order.

Incidentally, a light projecting part 239a and a detection part 239b are provided inside the refractive power sensor 239.

The light projecting part 239a generates a measurement light beam that is to be projected onto the observing eye EL, and the detection part 239b detects the measurement light beam that returns from the fundus of the observing eye EL.

Moreover, inside the refractive power sensor 239 in Figure 3-8, the symbol HM indicates a half-mirror.

The output of the refractive power sensor 239 (the output of the detection part 239b) is sent to the controller 214'. Inside the controller 214', the CPU 214a' recognizes the refractive power of the observing eye EL on the basis of this output. This refractive power indicates the visual distance t of the observing eye EL (i.e., the distance from the observing eye EL to the focal position).

Next, the characterizing parts (initialization, eye fatigue reducing operation) of the flow of the operation of the near-eye display of the present working configuration will be described. Furthermore, the flow of this operation is controlled by the CPU 214a'.

As is shown in Figure 3-9, an operation for initialization (step S2' in Figure 3-9) and an operation to reduce eye fatigue (step S3' in Figure 3-9, Figures 3-10(b) and 3-10(c)) are performed in that order.

The operation for initialization (step S2' in Figure 3-9) is initiated at the point in time at which there is an initialization instruction from the user U (YES in step S1 in Figure 3-9) via the setting button 214s.

In the operation for the purpose of initialization, the presentation distance t' of the virtual image I' of the display screen I is set at a specified value to' (step S21' in Figure 3-9; see Figure 3-10(a)).

This specified value t₀' is set at a distance that allows viewing by most users U, e.g., approximately 1 m.

In this case, furthermore, a video image or specified reference image input from an external device is displayed in the image display region Ia of the display screen I.

The user U views the virtual image I' in this case with the observing eye EL.

At the point in time at which this virtual image I' can be viewed, the user I' operates the setting button 14s, and sends a signal of confirmation to the near-eye display.

In the near-eye display, when a signal of confirmation is sent (YES in step S23 in Figure 3-9), the refractive power sensor 239 performs a measurement, and the visual distance t₀ of the observing eye EL at this point in time is recognized from the output of the refractive power sensor 239.

Here, as is also shown in Figure 3-10(a), the visual distance t₀ of the observing eye EL does not coincide with the presentation distance t₀' of the virtual image I', so that an offset Δ₀ that is characteristic of the user U is generated (t₀' = t₀ -Δ₀).

The reason for this is as follows: namely, the positional relationship between the observing eye EL and the display part 216' (i.e., the gap between the observing eye EL and the virtual image I') varies according to the user U, and even in the case of the same user U, this positional relationship also varies according to the mounting conditions of the near-eye display.

Accordingly, the offset Δ₀ may be viewed as information (characteristic information) relating to the mounting conditions of the near-eye display.

In the near-eye display, the difference between the visual distance t₀ of the observing eye EL and the presentation distance t₀' of the virtual image I' (t₀ - t₀') is determined as the offset Δ₀, and information relating to this offset Δ₀ is stored in the RAM 214b (step S24' in Figure 3-9).

Here, when the offset Δ₀ is determined, units of refractive power (diopter "Dp") are used as the units of the visual distance t₀ of the observing eye EL and the presentation distance t₀' of the virtual image I'. For example, the visual distance t₀ of the observing eye EL is expressed by the refractive power of the observing eye EL, and the presentation distance t₀' of the virtual image I' is expressed by the refractive power value required in order for the eye located in a specified position with reference to the display part 216' to focus the virtual image I'.

Subsequently, as is shown, for example, in Figures 3-10(b) and 3-10(c), the user U uses this near-eye display in his own desired location. Furthermore, Figures 3-10(b) and 3-10(c) show the respective conditions when the user U directly faces an arbitrary object O, and approaches or moves away from this object O.

In this case, video images input from an external device (images desired by the user U) are displayed in the image display region Ia of the display screen I.

In the near-eye display, the refractive power sensor 239 performs a measurement, the visual distance t of the observing eye EL is recognized from the output of the refractive power sensor 239, and the presentation distance t' of the virtual image I' with respect to the observing eye EL is set in the vicinity of the visual distance t of the observing eye EL in accordance with the visual distance t of the observing eye EL and information relating to the offset Δ₀ stored in the RAM 14b. The presentation distance t' of the virtual image I' is a distance obtained by correcting the visual distance t of the observing eye EL by an amount equal to the offset Δ₀ (t' = t - Δ₀).

In this correction, the same units as those used for the visual distance t₀ of the observing eye EL and the presentation distance t₀' of the virtual image I' in the determination of the offset Δ₀ are respectively used as the units of the visual distance t of the observing eye EL and the presentation distance t' of the virtual image I'.

The processing from these measurements to the setting is continuously repeated. Accordingly, the presentation distance t' of the virtual image I' conforms to the visual distance t of the observing eye EL (step S3' in Figure 3-9).

Next, the effect of the near-eye display of the present working configuration will be described.

In this near-eye display, as was described above, the visual distance t of the observing eye EL is detected by the refractive power sensor 239, and the presentation distance t' of the virtual image I' is set in accordance with this visual distance t. Therefore, the presentation distance t' of the virtual image I' conforms to the visual distance t of the observing eye EL (see Figures 3-10(b) and 3-10(c)).

If the presentation distance t' of the virtual image I' thus conforms to the visual distance t of the observing eye EL, then the amount of adjustment that is required when the observing eye EL that had been viewing the outside world views the virtual image I' can be reduced.

If the amount of adjustment is thus reduced, the fatigue of this observing eye EL can be reduced.

Furthermore, in this near-eye display, since the presentation distance t' of the virtual image I' is corrected (actually, the amount of driving of the display element driving part 216b' is corrected) in accordance with the offset Δ₀ that is characteristic of the user U, various users U can be handled.

Moreover, since this offset Δ₀ expresses the positional relationship between the observing eye EL and display part 216', various mounting conditions of the near-eye display can be handled.

In addition, since this near-eye display acquires characteristic information (offset Δ₀) directly from the user U, the separate measurement of mounting conditions and the storage of such mounting conditions by the user U can be omitted.

### (Other)

Furthermore, the information relating to the offset Δ₀ that is stored in the RAM 214b need not be the value of the offset Δ₀ itself; other information indicating the offset Δ₀, e.g., information relating to the refractive power of the observing eye EL or the like may also be used.

Moreover, the near-eye display of the present working configuration may also be modified as shown in Figure 3-7, and the amount of correction (caused to coincide with the offset Δ₀ in the above description) may be varied in real time in accordance with the variation in the output of the sensor 221 (disposed in the mechanism part of the front arm 213 and rear arm 212, and consisting of an encoder or the like which detects the state of this mechanism part). In this case, variations in the mounting conditions of the near-eye display during use can also be handled.

### [Other]

Furthermore, a single-eye type near-eye display using the present invention was described in Working Configuration 3-1 and Working Configuration 3-2. However, the present invention can also be applied to a both-eye type near-eye display of the see-through type.

Moreover, if variation in the fatigue reducing effect according to the user U and variation according to the mounting conditions of the near-eye display are allowed, the initialization operation described above may be omitted.

Furthermore, in order to eliminate this variation, it would also be possible to cause the user U to input separately measured characteristic information, and to cause the near-eye display to determine the amount of correction (which was caused to agree with the offset Δ₀ in the above description) on the basis of this input characteristic information.

In addition, in Working Configuration 3-1 and Working Configuration 3-2, units of refractive power (diopter "Dp") were used as the units of distance in the determination of the offset Δ₀ and during correction; however, it would also be possible to use ordinary units of distance (meters "m" or the like). As was described above, however, the use of units of refractive power is more desirable since such units make it possible to simplify the calculations used to determine the offset Δ₀ and the calculations used for correction (in concrete terms, addition calculations are performed).

Furthermore, it is not absolutely necessary to install a distance measuring sensor 217 (sensor means); the user can also adjust the presentation distance s' of the virtual image I' by manually driving the display element driving part 216b' (varying means) or by electrically driving this part.

Figure 4-1 is a perspective view of a head-mounted display device constituting a first working configuration of the present invention. Figure 4-2(a) is a plan view of the same, and Figure 4-2(b) is a schematic diagram of the same. Furthermore, in Figures 4-2(a) and 4-2(b), the controller and remote controller are omitted from the figures.

This head-mounted display device comprises a rear arm (mounting means) 410, a front arm (supporting means) 420, an image display part (display means) 430, an accommodating part 440, a controller 450, and a wireless remote controller 460.

The rear arm 410 has a circular arc shape, and is mounted on the rear part of the head.

Headphone parts 415 and 416 are disposed on either end part of the rear arm 410, and are mounted on the left and right ears of the operator (not shown in the figure). Both end parts of the rear arm 410 press against the side parts of the head via the headphone parts 415 and 416.

Furthermore, an accommodating part 440 which supports a bow-shaped front arm 420 so that this arm is free to slide is attached to one end part of the rear arm 410 via an attachment member 441. A display processing system, supporting part driving system, and the like (described later) are accommodated in the accommodating part 440.

An image display part 430 which is disposed in front of the eye of the operator is installed on the tip end part of the front arm 420. In the case of Figure 4-1, the image display part 430 is disposed in front of the left eye.

An infrared radiation receiving part (light receiving means) 431 is disposed on the opposite surface of the image display part 430 from the display surface. This part receives signal data that is output from the wireless remote controller 460.

The infrared radiation receiving part 431 faces downward at an inclination with respect to the visual axis. Furthermore, the infrared radiation receiving part 431 is located in a position that is shifted toward the nose with respect to the visual axis.

The controller 450 is connected to the accommodating part 440 via a cable 450a, and outputs control signals for the playback, stop, enlargement, and the like of images. Control signals can also be output from the wireless remote controller 460.

The wireless remote controller 460 has a transmitting part (light emitting means, not shown in the figures) comprising, for example, an infrared light-emitting diode. When keys (operating buttons) 461 through 465 (see Figures 4-6 through 4-10) are pressed, this controller 460 outputs control signals corresponding to the keys 461 through 465.

Figure 4-3 is a block diagram of the front arm 420, image display part 430, and accommodating part 440.

An ocular optical system 435 consisting of a focusing lens, reflective mirror, ocular lens, and the like that are required in order to project a video image onto the eye E of the operator, a display device 436 such as a liquid crystal panel or fluorescent tube, and the infrared radiation receiving part 431, are accommodated in the image display part 430.

Since the ocular optical system 435 is disposed between the eye E and the display device 436, the operator can be caused to experience the feeling of a 14-inch screen being displayed in a position that is (for example) 60 cm in front of the eye.

Although this is not shown in the figures, the infrared radiation receiving part 431 comprises a PIN photo-diode and a receiving IC. The receiving IC performs amplification, wave detection, waveform shaping and error correction.

The infrared radiation receiving part 431 amplifies the remote control signal received by the PIN photo-diode, and then performs wave detection, waveform shaping and data error correction, and outputs the resulting data as signal data.

A display processing system 442, an infrared radiation processing system 443, a supporting part driving system 444, a supporting part position sensor 445, and a control system 446 are accommodated in the accommodating part 440. Furthermore, a connector 447 is disposed in the accommodating part 440, and signals from the controller 450 are input into the display processing system 442 and control system 446 of the accommodating part 440 via the connector 447.

The display processing system 442 drives the display device 436 on the basis of signals from the controller 450. Moreover, the display processing system 442 alters the screen brightness, corrects image distortion, and the like.

The infrared radiation processing system 443 comprises a decoder constructed from a microcomputer. The signal data that is input into the infrared radiation processing system 443 is decoded into control signals.

Although this is not shown in the figures, the supporting part driving system 444 comprises a motor which extends and retracts the front arm 420, and a motor driving circuit which controls the driving of this motor.

The supporting part position sensor 445 detects the position of the front arm 420.

The control system 446 controls the operation (movement/stopping) of the supporting part driving system 444 on the basis of the output of the supporting part position sensor 445.

Furthermore, the control system 446 controls the controller 450 on the basis of the output of the infrared radiation processing system 443.

The operator wearing this head-mounted display device operates (for example) a portable VTR (video tape recorder) or DVD (digital versatile disk) player (not shown in the figures) using the controller 450 or wireless remote controller 460, and can view video images displayed on the image display part 430.

Furthermore, when video images are not being viewed, the supporting part driving system 444 can be driven using the wireless remote controller 460 so that the front arm 420 is accommodated in the accommodating part 440.

In this Working Configuration 4-1, since an infrared radiation receiving part 431 is disposed which is positioned on the opposite surface of the image display part 430 from the display surface, the operator wearing the head-mounted display devices does not need to confirm the position of the infrared radiation receiving part 431 when using the wireless remote controller 460; accordingly, the operating characteristics are improved.

Figure 4-4(a) is a plan view of a head-mounted display device constituting Working Configuration 4-2 of the present invention, and Figure 4-4(b) is a schematic diagram of the same. Parts that are the same as in Working Configuration 4-1 are labeled with the same symbols, and a description of such parts is omitted.

This working configuration differs from Working Configuration 4-1 in that an infrared radiation receiving part 531 is disposed on the end part 540a of the accommodating part 540 (end part of the display means).

The accommodating part 540 which supports the front arm 420 so that the front arm can slide is attached to one end part of the rear arm 410 via an attachment member 441.

An image display part 530 which is disposed in front of the eye E of the operator is installed on the tip end part of the front arm 420.

This working configuration makes it possible to obtain the same effect as Working Configuration 4-1.

Furthermore, it is not absolutely necessary to dispose the infrared radiation receiving part 531 on the end part 540a. For example, it would also be possible to form a protruding part on the upper surface of the accommodating part 540, and to install the infrared radiation receiving part 531 on this protruding part so that the light-receiving surface of the infrared radiation receiving part 531 faces forward.

Figure 4-5(a) is a plan view of a head-mounted display device constituting Working Configuration 4-3 of the present invention, and Figure 4-5(b) is a schematic diagram of the same. Parts that are the same as in Working Configuration 4-1 are labeled with the same symbols, and a description of such parts is omitted.

This working configuration differs from Working Configuration 4-1 in that a pair of infrared radiation receiving parts 631a and 631b are disposed in vertically symmetrical positions on the opposite surface of the image display part 630 from the display surface.

This working configuration makes it possible to obtain the same effect as Working Configuration 4-1. Furthermore, even if the head-mounted display device is mounted upside down, this head-mounted display device can be used with the image display part 630 disposed in front of either eye since one of the infrared radiation receiving parts 631a or 631b will always face downward at an inclination. In this case, in order to achieve even a small reduction in the effect of the unnecessary light, it is effective to selectively use only the signals received on the side facing downward.

Next, the wireless remote controller 460 will be described.

Figure 4-6(a) is a front view of a wireless remote controller constituting Working Configuration 4-4 of the present invention, and Figure 4-6(b) is a side view of the same.

Numerical input keys 461a through 461f, a stop key 462, a playback key 463, a pause key 464 and a mode selection key 465, which constitute operating buttons, are disposed on the upper surface of the case of the wireless remote controller 460 (remote controller case) Ce1.

Arabic numerals 1 through 6 are respectively printed on the surfaces of the numerical input keys.

The characters "stop," "playback" and "pause" are respectively printed near the stop key 462, playback key 463 and pause key 464.

The characters "mode selection" are printed on the upper surface of the mode selection key.

A transmitting part 466 which outputs signal data corresponding to the keys 461 through 465 is disposed on the side surface of the rear end part of the case Ce1. The transmitting part 466 has an infrared light-emitting diode, and intermittently outputs amplified and modulated infrared light, for example, at a frequency of around 38 kHz as digital data that is substantially parallel to the upper surface of the case Ce 1 as indicated by the arrow.

This wireless remote controller 460 is held horizontally, for example, in the palm of the right hand. If this controller is held in the palm of the right hand, the transmitting part 466 can easily be caused to face the infrared radiation receiving part 431 merely by slightly lowering the upper part of the wireless remote controller 460.

This working configuration makes it possible to improve the operating characteristics of the remote controller.

Figure 4-7(a) is a front view of a wireless remote controller constituting Working Configuration 4-5 of the present invention, and Figure 4-7(b) is a side view of the same. Part that are shared with Working Configuration 4-4 are labeled with the same symbols, and a description of such parts is omitted.

This wireless remote controller 560 differs from Working Configuration 4-4 in that the transmitting part 566 is disposed on the upper surface (surface on which the numerical input keys 461a through 461f are disposed) of the case of the wireless remote controller 560 (remote controller case) Ce2.

The transmitting part 566 has an infrared light-emitting diode, and intermittently outputs infrared light as digital data at an acute angle with respect to the upper surface of the case Ce2 as indicated by the arrow.

This working configuration makes it possible to obtain the same effect as Working Configuration 4-4; furthermore, since there is no need to tilt the wireless remote controller 560, the operating characteristics are further improved.

Next, a modified example of the controller will be described.

Figure 4-8(a) is a front view showing a state in which the wireless remote controller is fitted into the controller, and Figure 4-8(b) is a schematic diagram showing a sectional view of Figure 4-8(a).

A recessed part 651 which allows insertion of the wireless remote controller 460 is formed in the controller 650.

A receiving part 655 is formed in the side surface of the recessed part 651 in a position that faces the transmitting part 466 when the transmitting part 466 is engaged with the controller 650.

As is shown in Figure 4-8, when the wireless remote controller 460 is engaged with the recessed part 651 of the controller 650, signal data from the wireless remote controller 460 is sent to the receiving part 655 from the transmitting part 466; accordingly, the operation of the head-mounted display device can be controller from the controller 650.

In this controller 650, the wireless remote controller 460 can be engaged with the controller 650 when not in use. Accordingly, the trouble of searching for the wireless remote controller 460 at the time of use can be eliminated.

Furthermore, in the above description, it was assumed that this invention uses a wireless remote controller as a remote controller. However, a wired remote controller can also be used as a remote controller. For example, this is a remote controller in which a wired remote controller cable connected to the head-mounted display device is led out from the rear arm on the opposite side from the display part.

## Claims

1. An information display device in which the virtual image of a display device is observed using an ocular optical system that is mounted on the head, wherein this device has a rear arm which is mounted on the head, and a display arm to which a display part is attached, an accommodating part that accommodates at least a portion of the display arm is disposed in the rear arm, and the wiring that runs to the display part passes through the accommodating part and the display arm from a wiring attachment part disposed in the accommodating part, and is connected to the display part.

2. The information display device according to Claim 1, wherein a wiring retainer which retains the wiring that extends from the rear end part of the display arm is disposed inside the accommodating part in an intermediate position between the rear end position of the display arm when the display arm is pulled out and the display part is in a use state, and the rear end position of the display arm when the display arm is accommodated in the accommodating part.

3. The information display device according to Claim 1, wherein the bundle of the wiring is formed with a flat-plate-form flexible structure.

4. The information display device according to Claim 1, wherein the portion of at least the rear end part or front end part of the display arm (connecting part between the display part and this display arm) that contacts the wiring is beveled or formed with a structure that has no corners.

5. The information display device according to Claim 1, wherein the display part is connected to the display arm via a spherical bearing in a manner that allows pivoting, and the wiring reaches the display part by passing through the sphere of this spherical bearing.

6. An information display device in which the virtual image of a display device is observed using an ocular optical system which is mounted on the head, wherein this device has a rear arm which is mounted on the head, and a display arm to which a display part is attached, an accommodating part that accommodates the display arm is disposed in the rear arm, the wiring to the display part is connected to the first part of a slide connector disposed in the accommodating part from a wiring attachment part disposed in the accommodating part, the wiring from the display part passes through the display arm, and is connected to a second part of the slide connector disposed in the display arm, and the first and second parts of the slide connector are electrically connected only when the display arm is pulled out to the use position of the display part.

7. The information display device according to Claim 6, wherein a portion of the wiring that runs toward the first part of the slide connector from the wiring attachment part is branched and connected to the first part of another slide connector, and the first part of the other slide connector and the second part of the slide connector disposed in the display arm are electrically connected in a state in which the display arm is accommodated in the accommodating part.

8. The information display device according to Claim 6, wherein the system is devised so that when the first and second parts of the slide connector are electrically connected, a ground line is first connected, a common power supply line is then connected next, and subsequently, a signal line is connected.

9. The information display device according to Claim 6, wherein the display part is connected to the display arm by a spherical bearing so that this display part can pivot, and the wiring reaches the display part by passing through the sphere of the spherical bearing.

10. An information display device comprising an optical system for displaying images consisting of character information or image information, and mounting means for mounting the optical system on the user so that both the outside world and the images are presented to both eyes of this user, wherein the device further comprises detection means for detecting changes in the conditions of the outside world.

11. The information display device according to Claim 10, wherein the mounting means mounts the optical system on the user so that the image is presented to only one eye of the user.

12. The information display device according to Claim 10, wherein the detection means detects changes in the brightness of at least a portion of the region contained in the visual field of the user within the outside world as the changes in conditions described above.

13. The information display device according to Claim 10, wherein the detection means detects changes in the brightness distribution of at least a portion of the region contained in the visual field of the user within the outside world as the changes in conditions described above.

14. The information display device according to Claim 10, wherein a control part is provided which makes it possible to vary the relative degree of emphasis of the images with respect to the outside world, and this control part heightens the degree of emphasis of the images when the rate of changes in the conditions is contained in a specified range.

15. The information display device according to Claim 14, wherein the specified range is a range that can be recognized by the brain of the user.

16. The information display device according to Claim 14, wherein the control part heightens the degree of emphasis of the images by increasing the brightness of the images.

17. The information display device according to Claim 14, wherein the control part heightens the degree of emphasis of the images by emphasizing the contrast of the images.

18. The information display device according to Claim 14, wherein the control part heightens the degree of emphasis of the images by emphasizing the outlines of the images.

19. The information display device according to Claim 14, wherein the control part heightens the degree of emphasis of the images by weakening the intensity of light from the outside world that is incident on the eye of the user from the outside world.

20. The information display device according to Claim 14, wherein the control part can switch between a mode in which the degree of emphasis is varied in accordance with the rate of the changes in conditions, and a mode in which the degree of emphasis is not varied regardless of the rate of the changes in conditions.

21. An information display device comprising an optical system for displaying images consisting of character information or image information, mounting means for mounting the optical system on the user so that both the outside world and the images are presented to both eyes of the user, and varying means for varying the presentation distance of the images, wherein the varying means comprises presentation distance setting means for allowing the user to set the presentation distance in an arbitrary manner.

22. The information display device according to Claim 21, wherein the mounting means mounts the optical system on the user so that the images are presented to only one eye of the user.

23. An information display device comprising an optical system for displaying images consisting of character information or image information, mounting means for mounting the optical system on the user so that both the outside world and the images are presented to both eyes of the user, and varying means for varying the presentation distance of the images, wherein this information display device further comprises sensor means for acquiring information relating to variations in the visual distance of the eye viewing the outside world (of the two eyes of the user), and control means for driving the varying means in accordance with the output of the sensor means so that the presentation distance of the images conforms to the visual distance.

24. The information display device according to Claim 23, wherein the mounting means mounts the optical system on the user so that the images are presented to only one eye of the user.

25. The information display device according to Claim 23, wherein the sensor means is a sensor that detects changes in the distance of objects present in the outside world.

26. The information display device according to Claim 25, wherein the sensor means is a sensor that detects changes in the distance of objects that are present in the vicinity of the center of the visual field of the eye viewing the outside world.

27. The information display device according to Claim 23, wherein the control means corrects the amount of driving of the varying means in accordance with characteristic information relating to the user, which is acquired beforehand.

28. The information display device according to Claim 27, wherein the characteristic information includes information relating to the positional relationship between the eye (of the two eyes of the user) viewing the images, and the optical system.

29. The information display device according to Claim 27, wherein the characteristic information includes information relating to the refractive power of the eye (of the two eyes of the user) viewing the images.

30. The information display device according to Claim 27, wherein the eye viewing the outside world and the eye viewing the images are different eyes, and the characteristic information includes information relating to the difference in diopter between these two eyes.

31. The information display device according to Claim 27, wherein the device comprises acquisition means for acquiring the characteristic information from the user.

32. The information display device according to Claim 23, wherein the device further comprises a sensor for detecting changes in the positional relationship between the eye (of the two eyes of the user) viewing the images, and the optical system, and the control means corrects the amount of driving of the varying means in accordance with the output of this sensor.

33. The information display device according to Claim 23, wherein the device comprises means for displaying information relating to the presentation distance of the images.

34. The information display device according to Claim 23, wherein the means is also used by the optical system.

35. An information display device comprising mounting means that is mounted on the head, display means for displaying images, supporting means that is supported by the mounting means and that is used to dispose the display means in front of the eyes, and an accommodating part that is disposed on the mounting means and that accommodates the supporting means, wherein the device further comprises light receiving means for receiving light as control signals incident on the display means.

36. The information display device according to Claim 35, wherein the light receiving means is positioned on the opposite surface of the display means from the display surface.

37. The information display device according to Claim 35, wherein the device comprises mounting means that is mounted on the head, supporting means that is supported by the mounting means and that is used to dispose the display means in front of the eyes, and an accommodating part that is disposed on the mounting means and that accommodates the supporting means, wherein the light receiving means is positioned on the display means side of the accommodating part.

38. The information display device according to Claim 36, wherein the light receiving means faces downward at an inclination with respective to the visual axis.

39. The information display device according to Claim 38, wherein the light receiving means is located in a position that is shifted toward the nose with respect to the visual axis.

40. The information display device according to Claim 36, wherein the light receiving means are located in vertically symmetrical positions.

41. A wireless remote controller having an operating button disposed on a remote controller case, and light emitting means which is disposed in the remote controller case, and which emits light as control signals to light receiving means disposed in an information display device, wherein the light emitting means is disposed so as to face the operator when the operator operates the operating button.

42. The wireless remote controller according to Claim 41, wherein the light emitting means is disposed on the side surface of the remote controller case.

43. The wireless remote controller according to Claim 41, wherein the light emitting means is disposed on the surface of the remote controller case on which the operating button is disposed.

44. The wireless remote controller according to Claim 43, wherein the light from the light emitting means is emitted at an acute angle with respect to the surface on which the operating button is disposed.
